# EUROPÄISCHE PATENTSCHRIFT

(11) **EP 3 293 386 B1**
(45) Veröffentlichungstag und Bekanntmachung des Hinweises auf die Patenterteilung: **01.04.2020**
(21) Anmeldenummer: 17187905.9
(22) Anmeldetag: 25.08.2017
(51) Int. Cl.: F02K 1/38, F02K 1/48

(54) **MISCHERBAUGRUPPE FÜR EIN TURBOFAN-TRIEBWERK**
MIXER ASSEMBLY FOR TURBOFAN ENGINE
ENSEMBLE FORMANT MÉLANGEUR POUR UNE TURBINE À DOUBLE FLUX

(30) Priorität: 07.09.2016 DE 102016217033
(43) Veröffentlichungstag der Anmeldung: 14.03.2018
(73) Patentinhaber: Rolls-Royce Deutschland Ltd & Co KG, 15827 Blankenfelde-Mahlow (DE)
(72) Erfinder: TODOROVIC, Predrag, 15827 Blankenfelde-Mahlow (DE); KUBISCH, Thomas, 15827 Blankenfelde-Mahlow (DE)
(74) Vertreter: Maikowski & Ninnemann Patentanwälte Partnerschaft mbB

(56) Entgegenhaltungen:
- WO-A1-2013/163510
- US-A- 6 012 281
- US-A1- 2008 115 484

## Beschreibung

Die Erfindung betrifft ein Turbofan-Triebwerk mit einer Mischerbaugruppe nach dem Oberbegriff des Anspruchs 1.

Es ist, z.B. aus der US 2008/115484 A1, US 6,012,281 A und der WO 2013/163510 A1, bekannt, bei einem Turbofan-Triebwerk, das einen sich entlang einer Mittelachse erstreckenden Primärstromkanal und einen Sekundärstromkanal aufweist, im Bereich eines Auslasses des Turbofan-Triebwerks eine Mischerbaugruppe mit einem (Auslass-) Mischer (englisch "exhaust mixer") vorzusehen, um einen ersten Fluidstrom aus dem Primärstromkanal und einen zweiten Fluidstrom aus dem Sekundärstromkanal in Richtung des Auslasses zu leiten sowie die ersten und zweiten Flutströme zu vermischen. Über eine solche Mischerbaugruppe als Teil eines Auslassmischsystems, mittels dem ein erster warmer oder heißer Primärfluidstrom und ein zweiter kühlerer Sekundärfluidstrom miteinander vermischt werden, kann der erzielbare Schub erhöht und das Triebwerksgeräusch reduziert werden.

Aus der EP 3 032 083 A1 ist in diesem Zusammenhang beispielsweise eine Mischerbaugruppe für ein Turbofan-Triebwerk bekannt, die einen Mischer mit blütenförmiger oder mäanderförmigen Kontur umfasst (in der englischen Fachsprache auch als "lobed mixer" bezeichnet). Der Mischer ist hierbei vorzugsweise aus einem keramischen Faserverbundwerkstoff (englisch "ceramic matrix composite", kurz CMC) hergestellt und gestattet eine effiziente Vermischung eines im Betrieb warmen oder heißen Primärfluidstroms aus einem Primärströmungskanal des Kerntriebwerks des Turbofan-Triebwerks mit einem kühleren Sekundärfluidstrom aus einem Sekundär- oder Bypasskanal, bevor beide Fluidströme über einen Auslasskonus hinweg an einer Auslassdüse des Turbofan-Triebwerks nach außen strömen. Die Festlegung des separat hergestellten Mischers an einem oder mehreren Triebwerksbauteilen im Bereich des Auslasse erfolgt an einer Schnittstelle der Mischerbaugruppe, zum Beispiel an einem Trägerbauteil einer Niederdruckturbine des Kerntriebwerks mit ringförmigem Flanschabschnitt.

Aus der Praxis ist in diesem Zusammenhang für die Anordnung des Mischer in einem Turbofan-Triebwerk bereits bekannt, eine Festlegung an zwei unterschiedlichen Triebwerksbauteilen vorzusehen, die einerseits dem Primärstromkanal und andererseits dem Sekundärstromkanal zugeordnet sind, um den Mischer sowohl an den Primärstromkanal als auch den Sekundärstromkanal angrenzen zu lassen und die jeweiligen Fluidströme am Ende des jeweiligen Kanals über und durch den Mischer zu leiten. So kann beispielsweise eine Festlegung einer den Mischer aufweisenden Mischerbaugruppe an einem ersten Triebwerksbauteil vorgesehen sein, dass durch eine Verkleidung der Niederdruckturbine gebildet ist und damit eine radial innen liegende Wandung des Sekundärstromkanals definiert. Eine weitere Festlegung der Mischerbaugruppe kann ferner an einem dem Primärstromkanal zugeordneten zweiten Triebwerksbauteil vorgesehen sein. Ein solches zweites Triebwerksbauteil ist beispielsweise ein Trägerbauteil für die Austrittsleitschaufeln oder das Nachleitrad am Austritt der Niederdruckturbine.

Nachteilig an der Festlegung der Mischerbaugruppe an zwei Triebwerksbauteilen, die dem Primärfluidstrom einerseits und dem Sekundärfluidstrom andererseits zugeordnet sind, ist jedoch, dass diese Triebwerksbauteile im Betrieb des Turbofan-Triebwerks unterschiedlich hohen Betriebstemperaturen unterworfen sind. Die Festlegung der den Mischer aufweisenden Mischerbaugruppe erfolgt an Triebwerksbauteilen, die im Betrieb des Turbofan-Triebwerks extremen Temperaturgradienten unterworfen sind Aufgrund dieser teils erheblichen Temperaturunterschiede kommt es zu vergleichsweise sehr unterschiedlichen Wärmedehnungen und damit verbundenen starken Bauteilbelastungen durch Thermalspannungen, insbesondere an einer Verbindungseinrichtung, über die die Mischerbaugruppe an unterschiedlichen Triebwerksbauteilen festgelegt ist.

Es ist daher Aufgabe der Erfindung, ein Turbofan-Triebwerk mit einer Mischerbaugruppe bereitzustellen, die in dieser Hinsicht verbessert ist und insbesondere eine verbesserte Anbindung an unterschiedliche Triebwerksbauteile eines Turbofan-Triebwerks gestattet, die im Betrieb des Turbofan-Triebwerks unterschiedlich hohen Betriebstemperaturen unterworfen sind.

Diese Aufgabe wird mit einem Turbofan-Triebwerk des Anspruchs 1 gelöst.

Erfindungsgemäß weist die Verbindungseinrichtung zur Festlegung der Mischerbaugruppe mindestens ein Verbindungsbauteil auf, das an dem Mischer an wenigstens einer ersten Befestigungsstelle fixiert ist. Über die Verbindungseinrichtung werden ferner mindestens eine zweite und mindestens eine dritte Befestigungsstelle für die Verbindung der Mischerbaugruppe mit dem ersten Triebwerksbauteil und dem zweiten Triebwerksbauteil definiert. Dabei ist erfindungsgemäß vorgesehen, dass
- die ersten, zweiten und dritten Befestigungsstellen bezogen auf die Mittelachse des Turbofan-Triebwerks axial zueinander versetzt sind, wenn die Mischerbaugruppe bestimmungsgemäß an den zweiten und dritten Befestigungsstellen an den ersten und zweiten Triebwerksbauteilen festgelegt ist, und
- der Mischer über das mindestens eine an der ersten Befestigungsstelle fixierte Verbindungsbauteil bezogen auf die Mittelachse des Turbofan-Triebwerks radial sowohl relativ zu dem ersten Triebwerksbauteil als auch relativ zu dem zweiten Triebwerksbauteil verlagerbar gehalten ist, wenn die Mischerbaugruppe bestimmungsgemäß an den zweiten und dritten Befestigungsstellen an den ersten und zweiten Triebwerksbauteilen festgelegt ist.
Durch die radiale Verlagerbarkeit können unterschiedlich starke Wärmedehnungen der ersten und zweiten Triebwerksbauteile infolge der unterschiedlich hohen Betriebstemperaturen, denen diese im Betrieb des Turbofan-Triebwerks unterworfen sind, kompensiert werden. Über den axialen Versatz der ersten, zweiten und dritten Befestigungsstellen, an denen eine Verbindung mit dem Mischer einerseits und den ersten und zweiten Triebwerksbauteilen andererseits erfolgt, ist ferner über die Verbindungseinrichtung und insbesondere deren Verbindungsbauteil eine vergleichsweise steife Verbindung der genannten Komponenten untereinander in axialer Richtung - bezüglich der Mittelachse - bereitgestellt. Eine über die Verbindungseinrichtung und das mindestens eine Verbindungsbauteil eingebrachte Flexibilität in radialer Richtung, um unterschiedliche Wärmedehnung zu kompensieren, geht somit nicht zulasten einer dauerhaft stabilen und steifen Anordnung des Mischers an den zwei Triebwerksbauteilen bezüglich der axialen Richtung.

Da auch der Mischer üblicherweise durch den Kontakt mit dem warmen oder heißen ersten (Primär-) Fluidstrom aus dem Primärstromkanal ebenfalls einer vergleichsweise hohen Betriebstemperatur unterworfen ist, wird über die Aufteilung in erste, zweite und dritte Befestigungsstellen für die Anbindung an die unterschiedlichen Komponenten (Mischer, erstes Triebwerksbauteil, zweites Triebwerksbauteil) erreicht, dass die Komponenten der Verbindungseinrichtung effektiver die sich einstellenden Temperaturgradienten zwischen den unterschiedlich temperierten Triebwerksbauteilen und dem Mischer überbrücken können. Ein Temperaturverlauf über die Komponenten der Verbindungseinrichtung hinweg zwischen den einzelnen Befestigungsstellen kann gezielter beeinflusst und bei der Auslegung der Komponenten besser berücksichtigt werden.

In einer Ausführungsvariante ist der Mischer über das mindestens eine Verbindungsbauteil bezogen auf die Mittelachse des Turbofan-Triebwerks radial elastisch verlagerbar gehalten. Über das mindestens eine Verbindungsbauteil ist somit eine gewisse Elastizität in das Mischersystem eingebracht, um eine temperaturbedingt auftretende elastische Verlagerung des Mischers relativ zu den ersten und zweiten Triebwerksbauteilen zu gestatten.

Erfindungsgemäß weist das an dem Mischer fixierte Verbindungsbauteil der Verbindungseinrichtung ferner eine V-förmige Kontur auf oder das an dem Mischer fixierte Verbindungsbauteil umfasst mindestens einen Befestigungsabschnitt mit einer V-förmigen Kontur. Ein Schenkel der V-Form - zum Beispiel über ein freies Ende dieses Schenkels - oder eine die beiden Schenkel verbindende Basis der V-Form ist dann an der wenigstens einen ersten Befestigungsstelle an dem Mischer fixiert. Über ein in seiner Kontur V-förmiges Verbindungsbauteil oder ein Verbindungsbauteil mit einem V-förmigen Befestigungsabschnitt ist vergleichsweise einfach eine gewünschte Elastizität für die Anbindung des Mischer an die ersten und zweiten Triebwerksbauteile einbringbar, ohne die Steifigkeit und Festigkeit des Gesamtsystems negativ zu beeinflussen.

Durch die V-Form kann in einer Ausführungsvariante ein vergleichsweises dünnwandiges metallisches Verbindungsbauteil genutzt werden, das lokal ein sehr kleines Flächenträgheitsmoment aufweist und damit vergleichsweise einfach, d.h., unter Einwirkung einer vergleichsweise geringen Kraft, biegbar ist. Diese (lokale) Biegbarkeit ist mit Blick auf die unterschiedlichen Bauteiltemperaturen der mit dem Verbindungsbauteil verbundenen Komponenten und die damit an unterschiedlichen Abschnitten des Verbindungsbauteils anliegenden Temperaturen von Vorteil. Über die Anordnung mehrere V-förmiger Verbindungsbauteile oder mehrerer V-förmiger Befestigungsabschnitte verteilt über den Umfang des Mischers kann aber gleichzeitig ein Gerüstsystem für die Anbindung des Mischers bereitgestellt werden, über das der Mischer axial sehr stabil gehalten ist und das eine Kompensation resultierende Kräfte in axialer Richtung und in Umfangsrichtung erlaubt, die infolge von Vibrationen und Trägheitskräften auftreten können.

Beispielsweise kann wenigstens ein Schenkel der V-Form an dem Mischer fixiert sein, während eine Basis der V-Form für eine Verbindung mit dem ersten Triebwerksbauteil an der wenigstens einen zweiten Befestigungsstelle vorgesehen ist. Die Befestigungsstellen für den Schenkel einerseits und die Basis andererseits liegen hierbei dann vorzugsweise bezogen auf die Mittelachse des Turbofan-Triebwerks radial zueinander versetzt. Über den sich dann zumindest teilweise auch radial erstreckenden Schenkel ist dann eine gewisse radiale Verlagerbarkeit des Mischers relativ zu dem ersten Triebwerksbauteil gegeben. Über die V-Form und damit eine zusätzliche Fixierung an einem zweiten Schenkel ist hierbei nicht nur ganz allgemein eine erhöhte Steifigkeit erzielbar, sondern auch insbesondere eine verbesserte Sicherung gegen eine axiale Verlagerung des Mischers. Dies gilt insbesondere für ein Verbindungsbauteil mit mehreren hieran integral ausgebildeten V-förmigen Befestigungsabschnitten, die entlang eines Umfangs um die Mittelachse nebeneinander vorgesehen sind, oder wie auch mehrere identisch ausgestaltete, jeweils V-förmige Verbindungsbauteile einer Verbindungseinrichtung, die entlang eines Umfangs um die Mittelachse nebeneinander vorgesehen sind.

Anstatt wenigstens einen Schenkel oder beide Schenkel der V-Form an dem Mischer zu fixieren, kann auch vorgesehen sein, dass eine Basis der V-Form an dem Mischer fixiert ist und (a) wenigstens ein Schenkel der V-Form für eine Verbindung mit dem ersten Triebwerksbauteil an der wenigstens einen zweiten Befestigungsstelle vorgesehen ist und/oder (b) wenigstens eine Schenkel der V-Form mit einem anderen Verbindungsbauteil der Verbindungseinrichtung verbunden ist, das mit dem ersten und/oder zweiten Triebwerksbauteil an der ersten und/oder zweiten Befestigungsstelle zu verbinden ist. In dieser Variante ist folglich eine die beiden Schenkel der V-Form verbindende Basis an dem Mischer fixiert und wenigstens ein Schenkel - gegebenenfalls beide Schenkel - erstreckt sich von der Basis zumindest teilweise auch in radialer Richtung zu dem ersten Triebwerksbauteil oder einem anderen Verbindungsbauteil, das bei bestimmungsgemäßer Montage der Mischerbaugruppe mit dem ersten und/oder zweiten Triebwerksbauteil verbunden ist. Hierbei ist auch eine Variante eingeschlossen, bei der die Basis der V-Form an dem Mischer fixiert ist, ein erster Schenkel mit dem ersten Triebwerksbauteil zu verbinden ist und ein zweiter Schenkel mit einem anderen Verbindungsbauteil der Verbindungseinrichtung verbunden ist, das wiederum selbst mit dem ersten und/oder zweiten Triebwerksbauteil zu verbinden ist.

Die erste Befestigungsstelle, an der das wenigstens eine Verbindungsbauteil an dem Mischer fixiert ist, ist in einer Ausführungsvariante bezüglich der Mittelachse radial zu der wenigstens einen zweiten Befestigungsstelle für das erste Triebwerksbauteil und/oder radial zu der wenigstens einen dritten Befestigungsstelle für das zweite Triebwerksbauteil versetzt.

In einer hierauf basierenden Weiterbildung ist beispielsweise eine Reihe erster Befestigungsstellen an dem Mischer vorgesehen, die sich entlang einer Umfangsrichtung um die Mittelachse des Turbofan-Triebwerks erstreckt, wenn die Mischerbaugruppe bestimmungsgemäß an den ersten und zweiten Triebwerksbauteilen festgelegt ist, wobei diese Reihe erster Befestigungsstellen radial weiter innen liegt als eine Reihe dritter Befestigungsstellen des zweiten, dem Primärstromkanal zugeordneten Triebwerksbauteils. Die dritten Befestigungsstellen, die zum Beispiel für eine Festlegung an einem kreisringförmigen Flanschabschnitt des zweiten Triebwerksbauteils vorgesehen sind, liegen dabei bezogen auf die Radialrichtung zwischen der Reihe erster Befestigungsstellen und einer Reihe zweiter Befestigungsstellen für die Festlegung an dem ersten, dem Sekundärstromkanal zugeordneten Triebwerksbauteil. In dieser Ausführungsvariante sind somit - im bestimmungsgemäß montierten Zustand der Mischerbaugruppe - die ersten, zweiten und dritten Befestigungsstellen in einer Querschnittsansicht durch die Mittelachse des Turbofan-Triebwerks sowohl axial als auch radial zueinander versetzt.

Ein Verbindungsbauteil oder auch mehrere - vorzugsweise identisch ausgebildete - Verbindungsbauteile der Verbindungseinrichtung weisen in einer Ausführungsvariante zwei einstückig miteinander ausgebildete Abschnitte auf, wobei ein Abschnitt an der wenigstens einen ersten Befestigungsstelle an dem Mischer fixiert ist und der andere Abschnitt zur Verbindung mit einem der ersten und zweiten Triebwerksbauteile an der wenigstens einen zweiten oder dritten Befestigungsstelle vorgesehen ist. Diese Variante schließt insbesondere ein Verbindungsbauteil mit einer V-förmigen Kontur ein sowie ein Verbindungsbauteil mit einem V-förmigen Befestigungsabschnitt, der einstückig mit einem weiteren Abschnitt für die Verbindung mit einem der ersten und zweiten Triebwerksbauteile ausgebildet ist.

Grundsätzlich kann die Verbindungseinrichtung ein ringförmiges oder ringsegmentförmiges Verbindungsbauteil umfassen, das das die mindestens eine zweite Befestigungsstelle für die Verbindung der Mischerbaugruppe mit dem ersten Triebwerksbauteil und/oder die mindestens eine dritte Befestigungsstelle für die Verbindung der Mischerbaugruppe mit dem ersten Triebwerksbauteil definiert. Ein ringförmiges oder ringsegmentförmiges Verbindungsbauteil definiert dabei in einer Ausführungsvariante jeweils mehrere zweite und dritte Befestigungsstellen, beispielsweise über vorzugsweise jeweils äquidistant zueinander entlang eines Umfangs hintereinander angeordnete Bohrungen. Ein ringförmiges Verbindungsbauteil kann hierbei insbesondere als dichtende Blende (englisch "diaphragm") ausgebildet sein.

In einer Ausführungsvariante ist ein ringförmiges oder ringsegmentförmiges Verbindungsbauteil mit mehreren ersten V-förmigen und jeweils an dem Mischer fixierten Befestigungsabschnitten vorgesehen. Die ersten V-förmigen Befestigungsabschnitte sind hierbei an dem ringförmigen oder ringsegmentförmigen Verbindungsbauteil integral ausgebildet. Ferner ist mindestens ein mit mehreren (mindestens zwei) ersten Befestigungsabschnitten einstückig ausgebildeter weiterer Befestigungsabschnitt zur Verbindung mit dem ersten oder zweite Triebwerksbauteil vor gesehen. Beispielsweise sind an dem ringförmigen oder ringsegmentförmigen Verbindungsbauteil mehrere Befestigungslaschen mit V-förmiger Kontur freigeschnitten, deren Schenkel an dem Mischer fixiert sind und deren Basis jeweils durch einen durchgängigen ringförmigen oder ringsegmentförmigen Befestigungsabschnitt gebildet wird. Von diesem durchgängigen jeweils als Basis dienenden Befestigungsabschnitt Verbindungsbauteils erstrecken sich die V-förmiger Befestigungsabschnitte, die entlang des Umfangs des Verbindungsbauteils nebeneinander angeordnet sind, jeweils nach Art einer frei geschnittenen V-förmigen Lasche oder Zunge.

Ein solches ringförmiges oder ringsegmentförmiges Verbindungsbauteil kann beispielsweise mindestens drei unterschiedliche Befestigungsabschnitte für die Verbindung mit dem Mischer und den ersten und zweiten Triebwerksbauteilen integral ausbilden:
1. an einer stromauf liegenden Stirnseite des ringförmigen oder ringsegmentförmigen Verbindungsbauteils einen vorderen Befestigungsabschnitt für die Verbindung mit dem zweiten Triebwerksbauteil des Primärstromkanals,
2. an einer stromab liegenden Stirnseite des ringförmigen oder ringsegmentförmigen Verbindungsbauteils einen weiteren, hinteren Befestigungsabschnitt für die Verbindung mit dem ersten Triebwerksbauteil des Sekundärstromkanals und
3. mindestens einen zwischen den beiden Stirnseiten befindlichen V-förmigen weiteren Befestigungsabschnitt zur Verbindung mit dem Mischer, vorzugsweise mehrere V-förmige, laschenartige Befestigungsabschnitte, die zwischen den beiden Stirnseiten vorgesehen sind und entlang einer Umfangsrichtung nebeneinander vorliegen.

In einer alternativen Ausführungsvariante umfasst die Verbindungseinrichtung mindestens zwei separat hergestellte Verbindungsbauteile, wobei
- ein erstes Verbindungsbauteil für die Verbindung der Mischerbaugruppe mit den ersten und zweiten Triebwerksbauteilen an zweiten und dritten Befestigungsstellen vorgesehen ist und
- mindestens ein weiteres, zweites Verbindungsbauteil, das an dem Mischer an der mindestens einen ersten Befestigungsstelle fixiert ist und über das der Mischer relativ zu den ersten und zweiten Triebwerksbauteilen verlagerbar gehalten werden kann, (a) mit dem anderen, ersten Verbindungsbauteil verbunden und/oder (b) ebenfalls mit einem der ersten und zweiten Triebwerksbauteile zu verbinden ist.
Zur Reduzierung des Montageaufwands ist das zweite Verbindungsbauteil in einer Variante mit dem ersten Triebwerksbauteil im Bereich derjenigen zweiten Befestigungsstelle(n) verbunden, an der oder denen auch das andere Verbindungsbauteil mit dem ersten Triebwerksbauteil zu verbinden ist, um die Mischerbaugruppe bestimmungsgemäß an den ersten und zweiten Triebwerksbauteilen festzulegen. Anstelle eines einzelnen Verbindungsbauteils, das an ersten, zweiten und dritten Befestigungsstellen mit dem Mischer und den ersten und zweiten Triebwerksbauteilen über einstückig miteinander ausgebildete Abschnitte verbunden ist, ist in dieser Variante folglich eine strukturelle Trennung vorgesehen. Über ein erstes Verbindungsbauteil der Verbindungseinrichtung wird die Festlegung der Mischerbaugruppe an den ersten und zweiten Triebwerksbauteilen vorgegeben und über ein zweites Verbindungsbauteil die Anbindung an den Mischer sowie die Bereitstellung der gewünschten radialen Flexibilität erreicht.

In einer Variante ist beispielsweise vorgesehen, für die Festlegung an dem ersten und zweiten Triebwerksbauteil ein erstes ringförmiges oder ringsegmentförmiges Verbindungsbauteil vorzusehen. Dieses stellt dann beispielsweise auch eine Abdichtung bereit, die verhindert, dass Fluid aus dem Primärstromkanal über das ringförmige oder ringsegmentförmige erstere Verbindungsbauteil hinweg zwischen die beiden Triebwerksbauteile gelangt. Für die Anbindung des Mischers der Mischerbaugruppe mit ausreichender radialer Flexibilität und gewünschter axialer Steifigkeit sind dann mehrere zweite Verbindungsbauteile vorgesehen, die entlang einer Umfangsrichtung um die Mittelachse nebeneinander angeordnet sind und mit nur einem der Triebwerksbauteile und/oder dem ersten Verbindungsbauteil verbunden sind. Die mehreren zweiten, separat hergestellten Verbindungsbauteile können hierbei jeweils hinsichtlich ihrer Kontur (in der Draufsicht) V-förmig sein, wie dies vorstehend bereits generell für die Ausgestaltung eines Verbindungsbauteils dargestellt wurde.

Demgemäß kann in einer möglichen Weiterbildung vorgesehen sein, dass das erste Verbindungsbauteil für die Verbindung der Mischerbaugruppe mit den ersten und zweiten Triebwerksbauteilen ring oder ringsegmentförmig ist und mehrere zweite separat hergestellte, jeweils V-förmige Verbindungsbauteile vorgesehen sind, die jeweils
(a) an wenigstens einer ersten Befestigungsstelle an dem Mischer fixiert sind - beispielsweise über die beiden Schenkel der V-Form oder eine die beiden Schenkel verbindende Basis - und
(b) über die Basis oder die beiden Schenkel (b1) mit dem ringförmigen oder ringsegmentförmigen Verbindungsbauteil verbunden sind und/oder (b2) mit einem der erstem und zweiten Triebwerksbauteile zu verbinden sind.

In einer Ausführungsvariante mit wenigstens einem ersten Verbindungsbauteil und vorzugsweise mehreren separaten zweiten Verbindungsbauteilen ist vorgesehen, dass sich das ersten Verbindungsbauteil für die Verbindung der Mischerbaugruppe mit den ersten und zweiten Triebwerksbauteilen über das mindestens eine, zweite Verbindungsbauteil hinweg erstreckt, das an dem Mischer an der mindestens einen ersten Befestigungsstelle fixiert ist. Bezogen auf den bestimmungsgemäß an das Triebwerk montierten Zustand der Mischerbaugruppe liegt somit das erste Verbindungsbauteil radial weiter außen und überdeckt das mindestens eine weitere Verbindungsbauteil. Insbesondere kann eine Überdeckung mehrerer entlang eines Umfangs um die Mittelachse nebeneinander angeordneter zweiter Verbindungsbauteile durch ein einzelnes erstes Verbindungsbauteil vorgesehen sein. Jedes zweite Verbindungsbauteil ist hier folglich in einem sich radial erstreckenden Zwischenraum zwischen dem ersten Verbindungsbauteil und einem Verbindungsbereich des Mischers angeordnet, an dem die zweiten Verbindungsbauteile fixiert sind. Die zweiten Verbindungsbauteile sind folglich, vorzugsweise vollständig, in diesem Zwischenraum platzsparend aufgenommen. Die axiale Erstreckung der gesamten Verbindungseinrichtung für die Festlegung der den Mischer aufweisenden Mischerbaugruppe ist somit vergleichsweise gering und maßgeblich durch die axiale Erstreckung eines beispielsweise ringförmigen oder ringsegmentförmigen ersten Verbindungsbauteils vorgegeben. Die Verbindungseinrichtung baut somit vergleichsweise kompakt.

In einem Ausführungsbeispiel bildet ein separates zweites Verbindungsbauteil einen Befestigungsabschnitt für die Verbindung (a) mit dem ersten Verbindungsbauteil und/oder (b) dem ersten Triebwerksbauteil aus sowie wenigstens einen sich von diesem Befestigungsabschnitt weg erstreckenden Verbindungsschenkel. Der Verbindungsschenkel ist an der mindestens einen ersten Befestigungsstelle an dem Mischer fixiert und weist in seinem Verlauf von dem Befestigungsabschnitt zu der ersten Befestigungsstelle wenigstens in einem Bereich eine Krümmung um mehr als 90° auf. Über den gekrümmten und beispielsweise umgebogenen Bereich des Verbindungsschenkels können axiale Steifigkeit und radiale Flexibilität, die über das zweite Verbindungsbauteil maßgeblich beeinflusst werden, verbessert werden, ohne hierbei auf eine - insbesondere bezogen auf die axiale Erstreckung - kompakte Bauform verzichten zu müssen, da ein solches zweites Verbindungsbauteil im Vergleich zu einem zweiten Verbindungsbauteil ohne teilweise gekrümmten Verbindungsschenkel in axialer Richtung kaum oder keinen zusätzlichen Bauraum beansprucht. Ein mögliches Ausführungsbeispiel sieht vor, dass ein oder zwei Verbindungsschenkel des zweiten Verbindungsbauteils einen Bereich mit jeweils einer Krümmung von mehr als 90°, z.B. von mehr als 135° aufweisen.

Über die Verbindungseinrichtung kann ein axialer Mindestabstand des Mischers zu dem zweiten Triebwerksbauteil vorgegeben sein, sodass zwischen dem Mischer und dem zweiten Triebwerksbauteil ein Spalt, insbesondere ein ringförmiger Spalt definiert ist, wenn die Mischerbaugruppe bestimmungsgemäß an den ersten und zweiten Triebwerksbauteilen festgelegt ist. Bei dem zweiten Triebwerksbauteil handelt es sich vorzugsweise um ein Triebwerksbauteil, das dem Kerntriebwerk und mithin dem Primärstromkanal zugeordnet ist und an das sich der Mischer in Strömungsrichtung des Fluidstroms in dem Primärstromkanal unmittelbar anschließt. Über die Vorgabe eines definierten Spalt zwischen dem zweiten Triebwerksbauteil und dem Mischer ist dabei gezielt eine definierte räumliche Trennung zwischen unterschiedlich thermisch belasteten Komponenten erreicht. Ferner ist hiermit ein axiales Entkoppeln der Bauteile für ein besseres dynamisches Dämpfungsverhalten des Mischers erreicht. Des Weiteren kann hierüber eine Leckageströmung zugelassen sein, sodass warmes oder heißes Fluid aus dem Primärstromkanal an der stromauf gelegenen Stirnseite des Mischers bereits an der Außenseite des Mischers entlang strömen kann und zur Vermischung der Fluidströme aus den Primär- und Sekundärstromkanälen beiträgt. Ferner kann die gezielt zugelassene Leckageströmung zu einer verbesserten, mithin zusätzlich unterstützten (,re-energized') Strömung des (kalten) zweiten Fluidstroms des Sekundärstromkanals im Bereich der Mischerbaugruppe führen. Der vorgegebene, vorzugsweise ringförmige Spalt weist beispielsweise eine Breite von 1 bis 2 mm auf und übersteigt eine Breite von 2,5 bis 3 mm, in einer Variante von 2 mm, nicht.

Für die Verbindung der Mischerbaugruppe an dem zweiten Triebwerksbauteil kann mindestens ein Distanzstück vorgesehen sein, um den Mischer in dem vorgegebenen axialen Mindestabstand zu dem zweiten Triebwerksbauteil zu halten, wenn die Mischerbaugruppe bestimmungsgemäß an den ersten und zweiten Triebwerksbauteilen festgelegt ist. Ein solches Distanzstück kann beispielsweise ein Distanzring sein, der sich im montierten Zustand um die Mittelachse des Turbofan-Triebwerks erstreckt und beispielsweise zwischen einem Flanschabschnitt des zweiten Triebwerksbauteils und einem Befestigungsabschnitt eines Verbindungsbauteils der Verbindungseinrichtung angeordnet ist.

Der Mischer, über dessen Leitelemente die ersten und zweiten Fluidströme des Primärstromkanals und des Sekundärstromkanals entlang einer Umfangsrichtung um die Mittelachse vorzugsweise abwechselnd radial nach innen (im Falle des radial außen geführten Fluidstrom) und radial nach außen (im Fall des radial innen geführten Fluidstrom) gelenkt werden, um diese zu vermischen, weist in einer Ausführungsvariante eine blütenförmige oder mäanderförmigen Kontur auf. Über eine solche Kontur ist ein Mischer mit großvolumiger Mischergeometrie erzielbar, der üblicherweise als "lobed mixer" bezeichnet wird.

Alternativ oder ergänzend weist der Mischer Leitelemente für das Lenken der ersten und zweiten Fluidströme mit unterschiedlicher axialer Länge auf. So wechseln sich entlang des Umfangs des gegebenenfalls mit einer mäanderförmigen Kontur versehenen Mischers kurze und lange Leitelemente ab.

Der Mischer der Mischerbaugruppe kann zumindest teilweise aus einem Faserverbundwerkstoff hergestellt sein. Mit Blick auf ein möglichst geringes Gewicht des Mischer ist dieser beispielsweise aus einem keramischen Faserverbundwerkstoff (englisch "ceramic matrix composite", kurz CMC) hergestellt.

Mit der erfindungsgemäßen Lösung kann ein Turbofan-Triebwerk mit einem sich entlang einer Mittelachse erstreckenden Primärstromkanal und einem Sekundärstromkanal bereitgestellt werden, bei dem eine erfindungsgemäße Mischerbaugruppe im Bereich eines Auslasse des Turbofan-Triebwerks zum Einsatz kommt, um Fluidströme aus Primär- und Sekundärstromkanal zu vermischen und in Richtung des Auslasses zu leiten, wobei die Anbindung des Mischers an zweite Triebwerksbauteile mit unterschiedlich hohen Betriebstemperaturen erheblich verbessert ist.

Die beigefügten Figuren veranschaulichen exemplarisch mögliche Ausführungsvarianten der erfindungsgemäßen Lösung.

Hierbei zeigen:
- Figur 1A: eine erste Ausführungsvariante einer Mischerbaugruppe für ein erfindungsgemäßes Turbofan-Triebwerk mit einem einzigen Verbindungsbauteil einer Verbindungseinrichtung zur Anbindung der Mischerbaugruppe an zwei Trägerbauteile eines Turbofan-Triebwerks;
- Figur 1B: ausschnittsweise das als Verbindungsring ausgestaltete Verbindungsbauteil der Mischerbaugruppe der Figur 1A mit mehreren hieran integrierten und als Befestigungslaschen mit V-förmiger Kontur ausgestalteten Befestigungsabschnitten für die Fixierung an einem Mischer der Mischerbaugruppe;
- Figur 1C: ausschnittsweise eine Querschnittsdarstellung der an Triebwerksbauteile des Turbofan-Triebwerks montierten Mischerbaugruppe der Figur 1A;
- Figuren 2A - 2C: in unterschiedlichen Ansichten eine weitere Ausführungsvariante einer Mischerbaugruppe für ein erfindungsgemäßes Turbofan-Triebwerk mit einer Verbindungseinrichtung, die ein einziges Verbindungsbauteil in Form eines Verbindungsrings zur Festlegung der Mischerbaugruppe an Triebwerksbauteilen des Turbofan-Triebwerks aufweist;
- Figuren 3A - 3C: in unterschiedlichen Ansichten eine weitere Ausführungsvariante einer Mischerbaugruppe für ein erfindungsgemäßes Turbofan-Triebwerk, bei der eine Verbindungseinrichtung neben einem ersten Verbindungsbauteil in Form eines Verbindungsrings mehrere separate V-förmige zweite Verbindungsbauteile aufweist;
- Figuren 4A - 4B: unterschiedliche Ansichten eines zweiten Verbindungsbauteils;
- Figur 5: eine ausschnittsweise Querschnittsdarstellung der an die Triebwerksbauteile des Turbofan-Triebwerks montierten Mischerbaugruppe der Figur 3A;
- Figur 6A: eine Explosionsansicht einer weiteren Ausführungsvariante einer Mischerbaugruppe für ein erfindungsgemäßes Turbofan-Triebwerk zusammen mit einem ersten Triebwerksbauteil, an dem die Mischerbaugruppe festgelegt wird;
- Figur 6B: ausschnittsweise die an zwei Triebwerksbauteile montierte Mischerbaugruppe der Figur 6A;
- Figur 6C: ausschnittsweise eine Querschnittsdarstellung der an die Triebwerksbauteile montierten Mischerbaugruppe der Figur 6A;
- Figur 7A: eine Explosionsansicht einer weiteren Ausführungsvariante einer Mischerbaugruppe für ein erfindungsgemäßes Turbofan-Triebwerk zusammen mit einem ersten Triebwerksbauteil, an dem die Mischerbaugruppe festgelegt wird;
- Figur 7B: ausschnittsweise die an zwei Triebwerksbauteile montierte Mischerbaugruppe der Figur 7A;
- Figur 7C: ausschnittsweise eine Querschnittsdarstellung der an die Triebwerksbauteile montierten Mischerbaugruppe der Figur 7A;
- Figur 7D: zusätzliche Querschnittsansicht der Ausführungsvariante der Figuren 7A bis 7C unter Aussparung des zweiten, an dem Mischer fixierten Verbindungsbauteils;
- Figur 8A: eine Explosionsansicht einer weiteren Ausführungsvariante einer Mischerbaugruppe für ein erfindungsgemäßes Turbofan-Triebwerk zusammen mit einem ersten Triebwerksbauteil, an dem die Mischerbaugruppe festgelegt wird;
- Figur 8B: ausschnittsweise die an zwei Triebwerksbauteile montierte Mischerbaugruppe der Figur 8A;
- Figuren 9A - 9B: in unterschiedlichen Ansichten ein zweites Verbindungsbauteil der Ausführungsvariante der Figuren 8A und 8B, das eine V-förmigen Kontur aufweist und an zwei Verbindungsschenkeln um jeweils mehr als 90°, hier mehr als 135° in Richtung einer ersten Befestigungsstelle für die Fixierung an dem Mischer gekrümmt ist;
- Figur 10: ausschnittsweise eine Querschnittsdarstellung der Variante der Figuren 8A bis 8B mit an die Triebwerksbauteile montierter Mischerbaugruppe;
- Figur 11: eine Querschnittsansicht eines erfindungsgemäßen Turbofan-Triebwerks mit Mischerbaugruppe im Bereich eines Auslasse des Turbofan-Triebwerks.

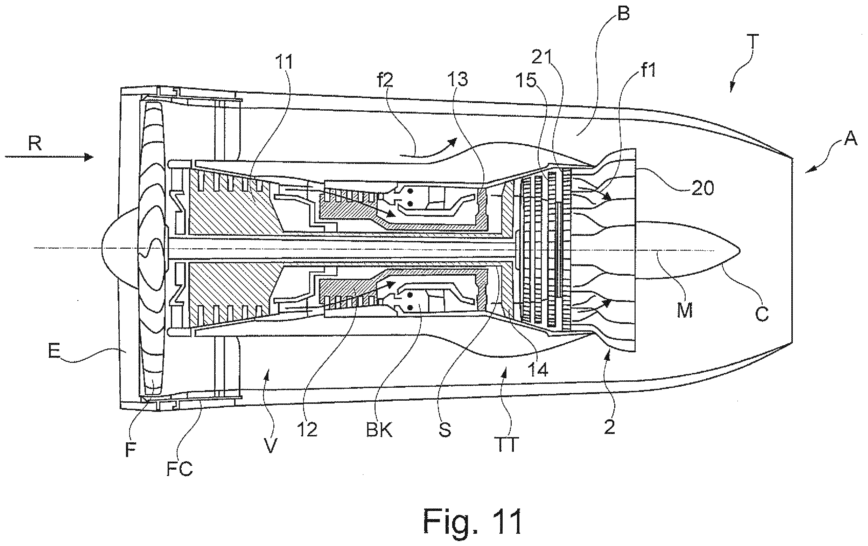

Die Figur 11 veranschaulicht schematisch und in Schnittdarstellung ein (Turbofan-) Triebwerk T, bei dem die einzelnen Triebwerkskomponenten entlang einer Rotationsachse oder Mittelachse M hintereinander angeordnet sind. An einem Einlass oder Intake E des Triebwerks T wird Luft entlang einer Eintrittsrichtung R mittels eines Fans F angesaugt. Dieser in einem Fangehäuse FC angeordnete Fan F wird über eine Rotorwelle S angetrieben, die von einer Turbine TT des Triebwerks T in Drehung versetzt wird. Die Turbine TT schließt sich hierbei an einen Verdichter V an, der beispielsweise einen Niederdruckverdichter 11 und einen Hochdruckverdichter 12 aufweist, sowie gegebenenfalls noch einen Mitteldruckverdichter. Der Fan F führt einerseits dem Verdichter V Luft zu sowie andererseits einem Sekundärstromkanal oder Bypasskanal B zur Erzeugung des Schubs. Der Bypasskanal B verläuft hierbei um ein den Verdichter V und die Turbine TT umfassendes Kerntriebwerk, das einen Primärstromkanal für die durch den Fan F dem Kerntriebwerk zugeführte Luft umfasst.

Die über den Verdichter V in den Primärstromkanal geförderte Luft gelangt in einen Brennkammerabschnitt BK des Kerntriebwerks, in dem die Antriebsenergie zum Antreiben der Turbine TT erzeugt wird. Die Turbine TT weist hierfür eine Hochdruckturbine 13, eine Mitteldruckturbine 14 und einen Niederdruckturbine 15 auf. Die Turbine TT treibt dabei über die bei der Verbrennung frei werdende Energie die Rotorwelle S und damit den Fan F an, um über die die in den Bypasskanal B geförderte Luft den erforderlichen Schub zu erzeugen. Sowohl die Luft aus dem Bypasskanal B als auch die Abgase aus dem Primärstromkanal des Kerntriebwerks strömen über einen Auslass A am Ende des Triebwerks T aus. Der Auslass A weist hierbei üblicherweise eine Schubdüse mit einem zentral angeordneten Austrittskonus C auf.

Insbesondere zur Lärmminderung ist im Bereich des Auslasses A ein Mischer 20 als Teil einer Mischerbaugruppe 2 vorgesehen. Über diese Mischerbaugruppe 2 und deren Mischer 20 werden ein erster Fluidstrom f1 aus dem Primärstromkanal, der das Kerntriebwerk hinter der Niederdruckturbine 15 verlässt, und ein zweiter Fluidstrom f2 aus dem Bypasskanal B vermischt. Hierfür werden über eine blütenförmige oder mäanderförmige Kontur des Mischers 20 Teile der erste (Primär-) Fluidstrom f1 aus dem Kerntriebwerk abwechselnd nach außen und der zweite (Sekundär-) Fluidstrom f2 aus dem Bypasskanal B nach innen gelenkt. Hierdurch werden segmentweise heiße und kalte Strömungszonen erzeugt und es wird eine Vermischung der beiden Fluidströme f1 und f2 erreicht. Durch die bei der Vermischung auftretenden Verwirbelungen wird niederfrequenter Lärm reduziert und höherfrequenter Lärm verstärkt, um im Ergebnis das hörbare Lärmniveau abzusenken.

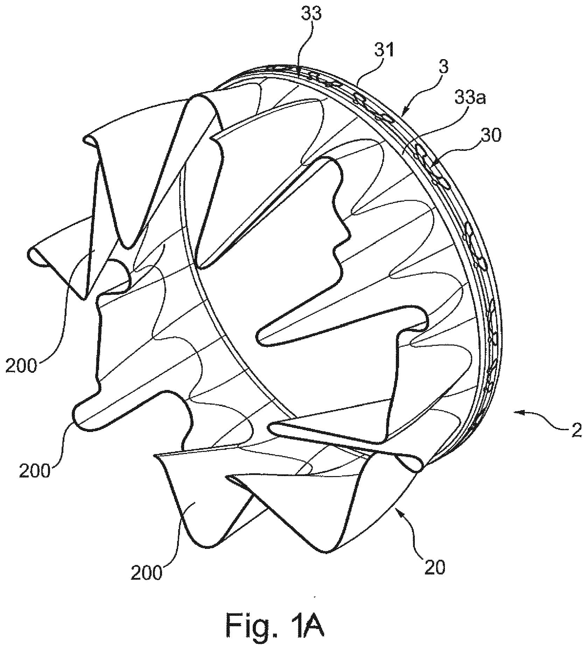

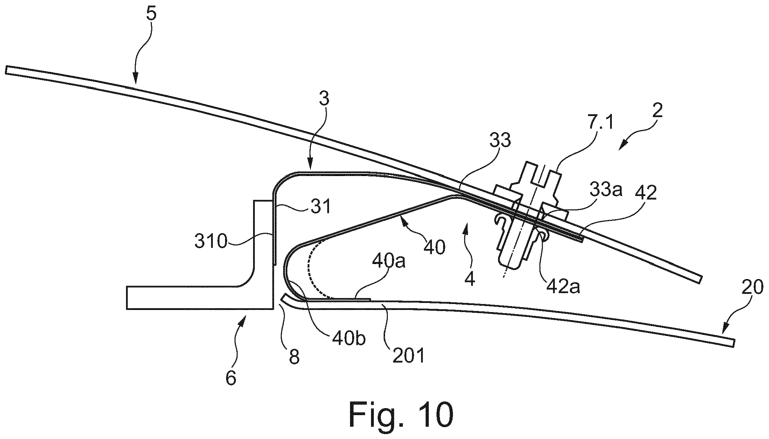

Der Mischer 20 ist vorliegend vorzugsweise aus einem Faserverbundwerkstoff, insbesondere einem keramischen Faserverbundwerkstoff hergestellt und weist in den nachfolgend noch näher erläuterten Ausführungsvariante der Figuren 1A bis 10 Leitelemente 200 unterschiedlicher axialer Länge auf, die die mäanderförmige Kontur des Mischers 20 definieren und nach Art von einander abwechselnden Flügeln und Furchen ausgebildet sind (englisch: "lobes and gulleys"). Über diese Leitelemente 200 werden die ersten und zweiten Fluidströme f1 und f2 aus dem Primärstromkanal des Kerntriebwerks und dem Bypasskanal B abwechselnd nach außen und nach innen gelenkt, um die gewünschte Vermischung der Fluidströme f1 und f2 zu erreichen.

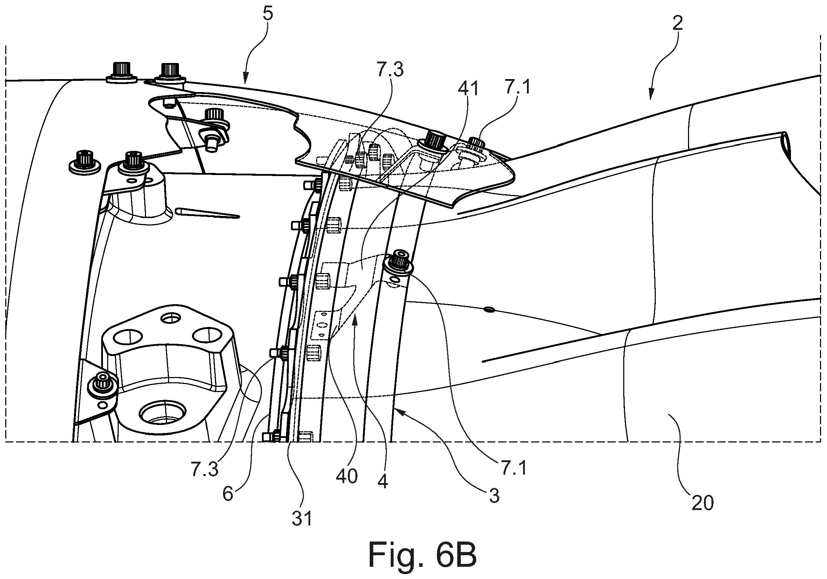

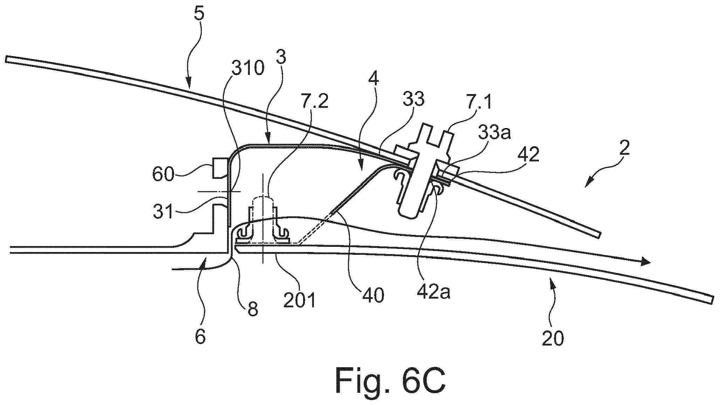

Die Anbindung der Mischerbaugruppe 2 erfolgt im Bereich einer Schnittstelle 21 an Triebwerksbauteilen des Kerntriebwerks. Dies ist in der Praxis mit nicht unerheblichen Schwierigkeiten verbunden. Beispielsweise bietet sich für die effektive Lenkung der Fluidströme f1 und f2 aus dem Primärstromkanal und dem Bypasskanal B eine Anbindung der Mischerbaugruppe 2 sowohl an ein erstes, dem Bypasskanal B zugeordnetes Triebwerksbauteil als auch an ein zweites, dem Primärstromkanal zugeordnetes Triebwerksbauteil an. Beispielsweise wird ein erstes Triebwerksbauteil durch ein Verkleidungsbauteil 5 des Kerntriebwerks im Bereich der Niederdruckturbine 15 gebildet, das eine radial innere Wandlung des Bypasskanals B bildet oder benachbart zu dieser liegt (vgl. z.B. Figur 6B). Ein zweites Triebwerksbauteil ist beispielsweise ein Trägerbauteil 6 der Niederdruckturbine 15, an dem am Austritt der Niederdruckturbine 15 Leitschaufeln gehalten sind oder ein Nachleitrad definiert ist.

Im Betrieb des Turbofan-Triebwerks T sind jedoch die beiden dem Primärstromkanal einerseits und dem Bypasskanal B andererseits zugeordneten Triebwerksbauteile, an denen die Mischerbaugruppe 2 zu befestigen ist, unterschiedlichen Betriebstemperaturen unterworfen. So ist es nicht unüblich, dass das zweite Triebwerksbauteil, an dem der erste heißere Fluidstrom f1 des Primärstromkanals vorbeigeführt wird, um mindestens mehr als 400 bis 500 °C stärker erhitzt wird als das andere erste Triebwerksbauteil, an dem der zweite Fluidstrom f2 des Bypasskanals B vorbeigeführt wird. Es kommt damit im Bereich der Schnittstelle 21 der Mischerbaugruppe 2 zu unterschiedlich starken Wärmedehnungen und vergleichsweise großen Temperaturgradienten, die die unterschiedlichen Bauteilverbindungen erheblich belasten.

In dieser Hinsicht versucht die erfindungsgemäße Lösung Abhilfe zu schaffen, zu der exemplarisch unterschiedliche Ausführungsvarianten in den beigefügten Figuren 1A bis 10 veranschaulicht sind.

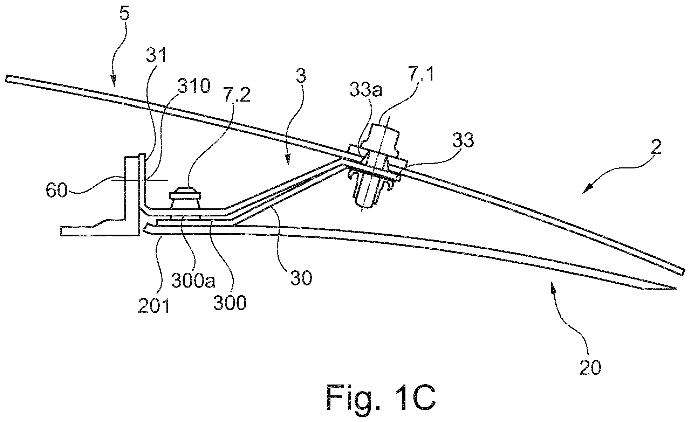

Bei jeder der dargestellten Ausführungsvarianten der Figuren 1A bis 10 ist eine Verbindungseinrichtung mit wenigstens einem Verbindungsbauteil 3 oder mehreren Verbindungsbauteilen 3, 4 vorgesehen, über die der Mischer 20 der Mischerbaugruppe 2 an wenigstens zwei verschiedenen und im Betrieb des Turbofan-Triebwerks T unterschiedlich hohen Betriebstemperaturen unterworfenen Triebwerksbauteilen 5, 6 befestigt ist und bezüglich dieser beiden Triebwerksbauteile 5, 6 radial verlagerbar ist, um unterschiedlich starke Wärmedehnungen der beiden Triebwerksbauteile 5, 6 im Betrieb des Turbofan-Triebwerks T zu kompensieren. Hierbei ist stets mindestens ein Verbindungsbauteil 3 oder 4 der Verbindungseinrichtung an dem Mischer 20 an wenigstens einer ersten Befestigungsstelle fixiert. Ferner definiert die jeweilige Verbindungseinrichtung mehrere zweite und dritte Befestigungsstellen, über die die Mischerbaugruppe 2 mit den beiden Triebwerksbauteilen 5, 6 im montierten Zustand verbunden ist. Dabei sind die ersten Befestigungsstellen für die Fixierung an dem Mischer 20 sowie die zweiten und dritten Befestigungsstellen für die Festlegung an den beiden unterschiedlichen Triebwerksbauteilen bezogen auf die Mittelachse M axial zueinander versetzt, wie insbesondere anhand der Querschnittsansichten der Figuren 1C, 5, 6C, 7C und 10 illustriert ist.

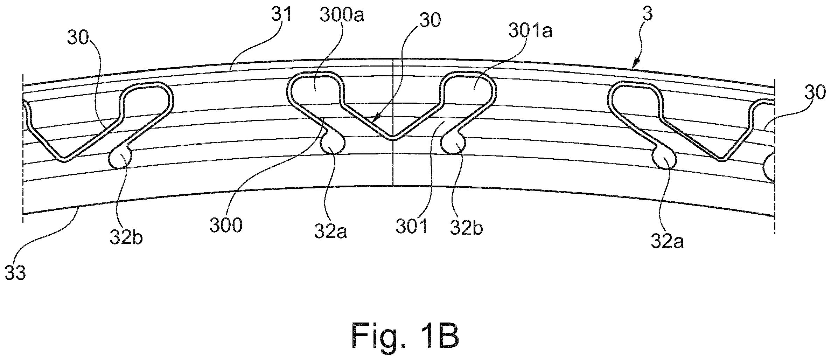

Bei der Ausführungsvariante der Figuren 1A, 1B und 1C ist beispielsweise ein Verbindungseinrichtung für die Mischerbaugruppe 2 - unabhängig von etwaigen zusätzlichen Befestigungselementen, wie Bolzen, Schrauben oder Nieten - durch ein Verbindungsbauteil in Form eines Verbindungsrings 3 gebildet. Dieser Verbindungsring 3 bildet eine zumindest teilweise dichtende Blende (englisch als "diaphragm" bezeichnet) zwischen dem Austritt der Niederdruckturbine 15 und dem Verkleidungsbauteil 5, das sich in axialer Richtung über das Trägerbauteil 6 hinaus erstreckt. Über den Verbindungsring 3 soll zumindest teilweise verhindert werden, dass Fluid aus dem Primärstromkanal zwischen die beiden Triebwerksbauteile 5, 6 strömt, an denen die Mischer Baugruppe 2 festgelegt wird. Bei diesen Triebwerksbauteilen handelt es sich vorliegend entsprechend der Figur 1C und den vorstehenden Erläuterten um ein Verkleidungsbauteil 5 der Niederdruckturbine 15 sowie ein radial weiter innen liegendes, den Auslass der Niederdruckturbine 15 definierendes Trägerbauteil 6 mit einem ringförmigen Verbindungsflansch 60.

Für die Fixierung an den beiden Triebwerksbauteilen 5 und 6 einerseits und an einem Verbindungsbereich 201 am äußeren Umfang des Mischer 20 andererseits bildet der Verbindungsring 3 mehrere hieran integral ausgebildete Befestigungsabschnitte 33, 31 und 30 aus.

Mehrere erste Befestigungsabschnitte 30 für die Fixierung an dem Mischer 20 sind hierbei an dem Verbindungsring 3 durch jeweils freigeschnittene Befestigungslaschen 30 mit V-förmiger Kontur gebildet. Jede dieser entlang des Umfangs des Verbindungsrings 3 nebeneinander angeordneten Befestigungslaschen 30 weist zwei Verbindungsschenkel 300 und 301 auf, die zur Bildung der V-förmigen Kontur unter einem Winkel zueinander verlaufen und an einer gemeinsamen Basis verbunden sind. Die Basis ist dabei jeweils integraler Bestandteil eines hinteren Randes des Verbindungsringes 3, der im montierten Zustand der Mischerbaugruppe 2 dem Auslass A zugewandt ist. Jedes Paar Verbindungsschenkel 300 und 3001 einer Befestigungslasche 30 ist an der jeweiligen Basis und damit an dem umfangsseitig umlaufenden hinteren Rand des Verbindungsringes 3 elastisch verlagerbar gehalten. An einem jeweiligen freien Enden ist jeder Verbindungsschenkel 300, 301 am Verbindungsbereich 201 des Mischers 20 fixiert. Damit bildet jeder Verbindungsschenkel 300 und 301 an seinem freien Ende eine erste Befestigungsstelle 300a oder 301a für die Fixierung an dem Mischer 20. Für die Fixierung an dem Verbindungsbereich 201 des Mischers 20 ist dabei beispielsweise jeweils ein Befestigungselement 7.2 in Form eines Niets vorgesehen.

Wie insbesondere in der Querschnittsansicht der Figur 1C ersichtlich ist, erstreckt sich das Verkleidungsbauteil 5 im bestimmungsgemäß montierten Zustand der Mischerbaugruppe 2 zumindest über den Verbindungsbereich 201 des Mischer 20 hinweg und ragt mit einem Endabschnitt über den durch das Trägerbauteil 6 definierten Austritt des Niederdruckturbine 15 hinaus. Über seinen hinteren Rand ist der Verbindungsring 3 an einer Innenseite dieses Endabschnitts des Verkleidungsbauteils 5 - mit axialem Versatz zu den ersten Befestigungsstellen 300a und 301a -fixiert. Derart definiert der hintere, dem Auslass A zugewandte Rand des Verbindungsrings 3 einen umfangsseitig umlaufenden Befestigungsabschnitt 33 zur Definition mehrerer zweiter Befestigungsstellen 33a, an denen der Verbindungsring 3 an dem Verkleidungsbauteil 5 fixiert wird, hier zum Beispiel über mehrere Befestigungselemente 7.1 in Form von Schraubbolzen.

An einem dem Auslass A abgewandten und mithin vorderen Rand bildet der Verbindungsring 3 einen ebenfalls umfangsseitig umlaufenden dritten Befestigungsabschnitt in Form eines Befestigungsflansches 31 aus. Dieser Befestigungsflansch 31 ist zur Fixierung der Mischerbaugruppe 2 an den Trägerbauteil 6 an dessen Verbindungsflansch 60 vorgesehen. Der Befestigungsflansch 31 des Verbindungsrings 3 definiert somit mehrere entlang des Umfangs des Verbindungsrings 3 nebeneinander angeordnete dritte Befestigungsstellen 310, an denen die Mischerbaugruppe 2 an dem Trägerbauteil 6 fixiert wird.

Im bestimmungsgemäß an die beiden Triebwerksbauteile 5 und 6 montierten Zustand der Mischerbaugruppe 2 liegen die ersten Befestigungsstellen 300a, 301a, die zweiten Befestigungsstellen 33a und die dritten Befestigungsstellen 310a für die Verbindung des Verbindungsrings 3 mit dem Mischer 20, dem Verkleidungsbauteil 5 und dem Trägerbauteil 6 bezogen auf die Mittelachse M axial versetzt zueinander. Alle ersten Befestigungsstellen 300a, 301a, an denen die Befestigungslaschen 30 mit dem Mischer 20 verbunden sind, liegen zwischen den zweiten und dritten Befestigungsstellen 33a und 310, an denen der Verbindungsring 3 einerseits an dem Verkleidungsbauteil 5 und andererseits an dem Trägerbauteil 6 fixiert ist. Auch sind die ersten, zweiten und dritten Befestigungsstellen 300a, 301a; 33a und 310 zumindest jeweils geringfügig zueinander radial versetzt. Über die derart realisierte starre Anbindung des Verbindungsrings 3 an das Verkleidungsbauteil 5 einerseits und das Trägerbauteil 6 andererseits ist der Mischer 20 der Mischer Baugruppe 2 bezogen auf eine axiale Richtung vergleichsweise steif relativ zu den Triebwerksbauteilen 5 und 6 montiert. Gleichzeitig ist über die einzelnen am Umfang des Mischers 20 fixierten Befestigungslaschen 30, die jeweils integraler Bestandteil des Verbindungsrings 3 sind, der Mischer 20 an den Triebwerksbauteilen 5, elastisch verlagerbar gehalten. Hierüber ist sichergestellt, dass sich der Mischer 20 im Betrieb des Turbofan-Triebwerks T ausreichend radial bezüglich der beiden Triebwerksbauteile 5 und 6 verlagern kann, um unterschiedlich stark ausgeprägte Wärmedehnungen zu kompensieren. So ist das Verkleidungsbauteil 5 im Betrieb des Turbofan-Triebwerks T deutlich niedrigeren Betriebstemperaturen unterworfen als das Trägerbauteil 6, an dem der heiße Fluidstrom aus der Niederdruckturbine unmittelbar vorbeigeführt wird, oder als der Mischer 20, an dem innen ebenfalls das heißere Fluid aus dem Primärstromkanal vorbeiströmt und umgelenkt wird.

Wie aus der Draufsicht der Figur 1B ersichtlich ist, sind an dem Verbindungsring 3 im Bereich der Basis einer jeden Verbindungslasche 30 Aussparungen an einander abgewandten äußeren Rändern der Verbindungsschenkel 300 und 301 vorgesehen. Hierüber können im Material des Verbindungsrings 3 im Bereich der jeweiligen Basis auftretende Spannungen reduziert werden. Gleichzeitig sind die Aussparungen 32a und 32b, die hier jeweils im Wesentlichen kreisförmig ausgestaltet sind, vergleichsweise klein gehalten, um ein Durchströmen des Verbindungsrings 3 an diesen Stellen mit Fluid aus dem Primärstromkanal zu begrenzen.

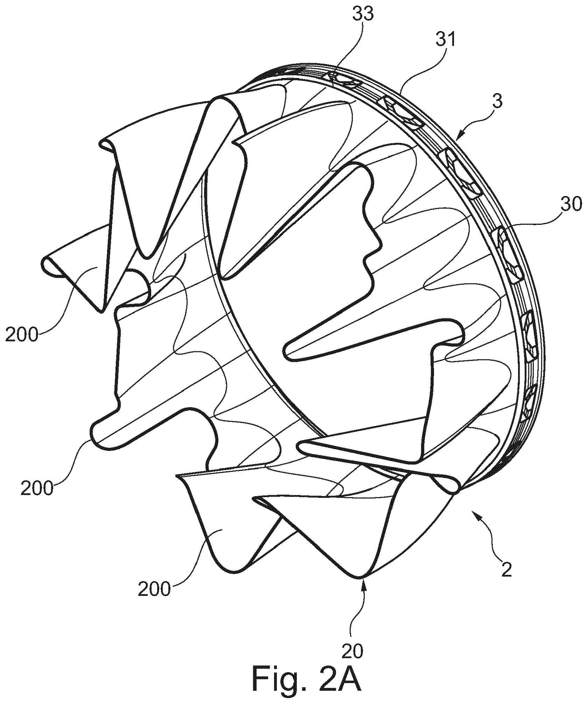

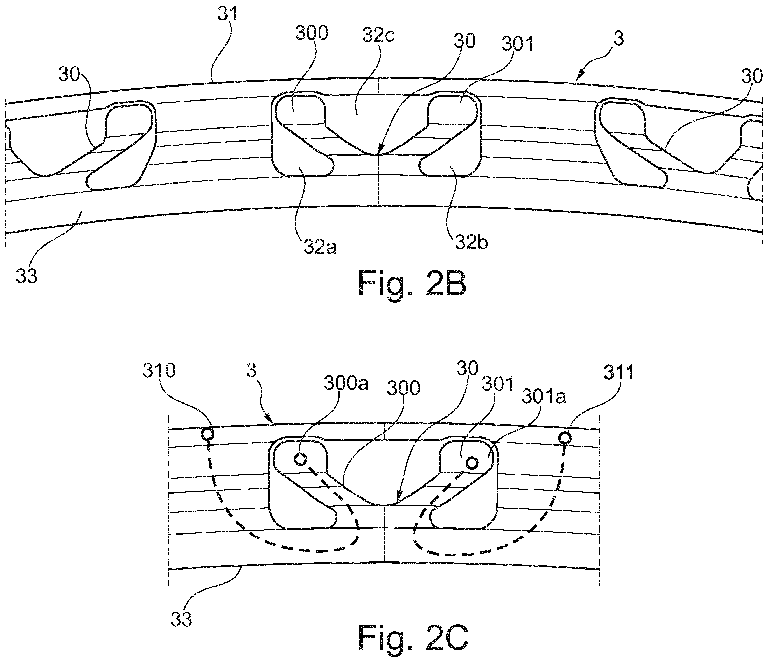

Bei dem Ausführungsbeispiel der Figuren 2A bis 2C ist demgegenüber eine größere Durchströmung des Verbindungsrings 3 im Bereich der Befestigungslaschen 30 zugunsten einer größeren Reduktion der auftretenden Spannungen im Bereich der Befestigungslaschen 30 zugelassen. In dieser Ausführungsvariante sind nicht nur die seitlichen Aussparungen 32a und 32b an den einander abgewandten seitlichen Rändern der Verbindungsschenkel 300 und 301 vergrößert. Vielmehr ist auch eine Aussparung 32c zwischen den beiden Verbindungsschenkeln 300 und 301 im Material des Verbindungsrings 3 vorgesehen. Hierdurch ist bei gleichbleibender Materialstärke eine höhere Elastizität im Bereich der Befestigungslaschen 30 erreicht.

Im Wesentlichen identisch bleibt jedoch bei diese Ausführungsvariante ein über den Verbindungsring 3 mit seinen integral ausgebildeten Befestigungslaschen 30 bereitgestellter, vergleichsweise großer Kraftübertragungspfade zwischen den ersten Befestigungsstellen 300a und 301a, an den jeweils eine Fixierung an dem Mischer 20 erfolgt, und flanschseitigen dritten Befestigungsstellen 310 und 311 für die Fixierung an dem heißeren Trägerbauteil 6. Die entsprechenden Kraftleitungspfade sind in der vergrößerten Darstellung der Figur 2C exemplarisch veranschaulicht. Indem sich die freien Enden der Verbindungsschenkel 300, 301 jeder einzelnen Befestigungslasche 30 in Richtung des Befestigungsflansches 31 am vorderen Rand des Verbindungsrings 3 erstrecken, an dem die Fixierung an dem Trägerbauteil 6 erfolgt, ist der axiale Abstand zwischen den ersten Befestigungsstellen 300a und 301a für die Fixierung an dem Mischer 20 zu den dritten Befestigungsstellen 310, 311 vergleichsweise gering. Dies führt zu einer relativ kurzen effektiven Hebellänge und damit zu einer geringeren radialen Verlagerung infolge der auftretenden Temperaturgradienten im Vergleich zu einer Fixierung des Verbindungsrings 3 an dem Mischer 20 an einem weiter stromab, in Richtung des Auslasses A liegenden Verbindungsbereich.

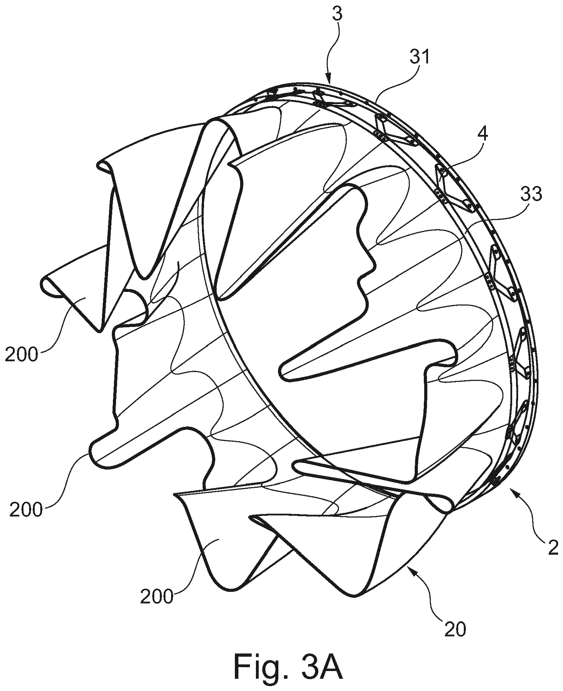

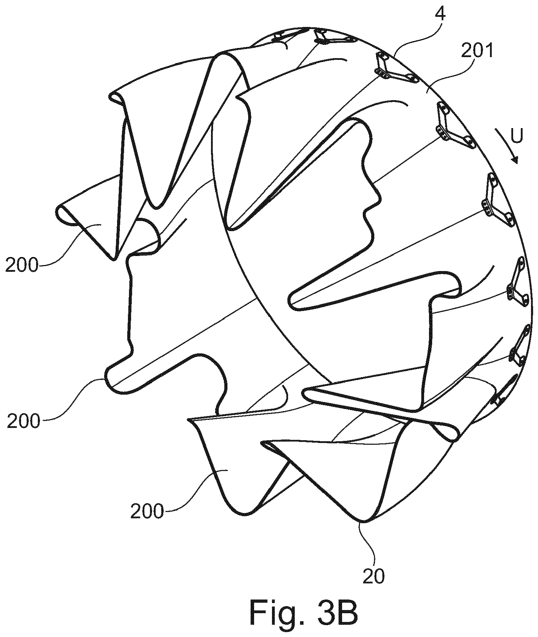

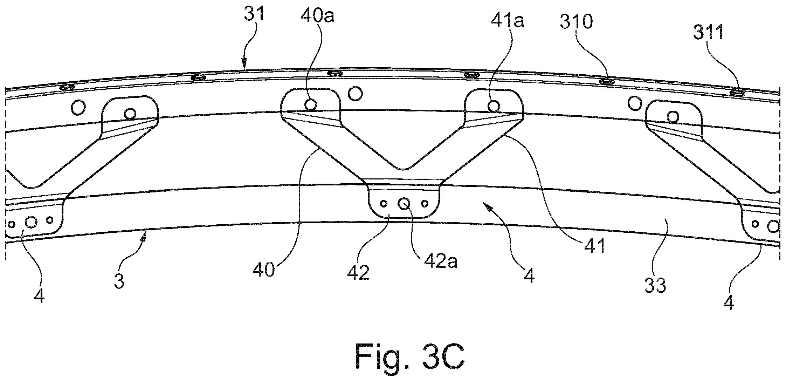

Bei den Ausführungsvarianten der beigefügten Figuren 3A bis 10 weist eine Verbindungseinrichtung der Mischerbaugruppe 2 zur Anbindung an die beiden Triebwerksbauteile 5 und 6 des Turbofan-Triebwerks T zusätzlich zu einem ersten Verbindungsteil in Form eines Verbindungsrings 3 mehrere zweite Verbindungsbauteile in Form einzelner Befestigungsbügel (englisch "fastening brackets") auf, die jeweils eine V-förmige Kontur aufweisen. Die einzelnen, beispielsweise aus Metall gefertigten Befestigungsbügel 4 sind an dem Verbindungsbereich 201 des Mischers über dessen äußeren Umfang verteilt angeordnet.

In denen dargestellten Ausführungsbeispielen der Figuren 3A bis 10 sind die einzelnen Befestigungsbügel 4 jeweils äquidistant zueinander beabstandet und jeweils an mindestens einer ersten Befestigungsstelle 40a, 41a oder 42a an der äußeren Mantelfläche des Mischers 20 fixiert. Durch die Verwendung verschiedener, separat hergestellter Verbindungsbauteile 3, 4 kann der Verbindungsring 3 ohne zusätzliche Aussparungen und Durchbrüche für die zusätzliche Fixierung an dem Mischer 20 ausgebildet werden. Der Verbindungsring 3, der sowohl an dem Verkleidungsbauteil 5 als auch an dem Trägerbauteil 6 fixiert wird, kann somit einen zwischen den beiden Triebwerksbauteilen 5 und 6 vorhandenen Zwischenraum gegenüber dem Primärstromkanal abdichten, wenn die Mischerbaugruppe 2 bestimmungsgemäß an den beiden Triebwerksbauteilen 5 und 6 fixiert ist. Ist bei den Varianten der Figuren 1A bis 1C und 2A bis 2C eine Leckageströmung in einen solchen Zwischenraum durch den Verbindungsring 3 hindurch toleriert, soll dies bei den Ausführungsvarianten der Figuren 3A bis 10 möglichst ausgeschlossen werden. Allenfalls Leckageströme aus dem Primärstromkanal in einen Zwischenraum zwischen der Innenseite des Verkleidungsbauteils 5 und der äußeren Mantelfläche des Mischers 20 sollen möglich sein. Gleichzeitig soll über die Vielzahl der V-förmigen Befestigungsbügel 4 und die axiale Beabstandung der einzelnen Befestigungsstellen eine temperaturbedingte radiale Verlagerbarkeit des Mischers 20 weiterhin gegeben sein.

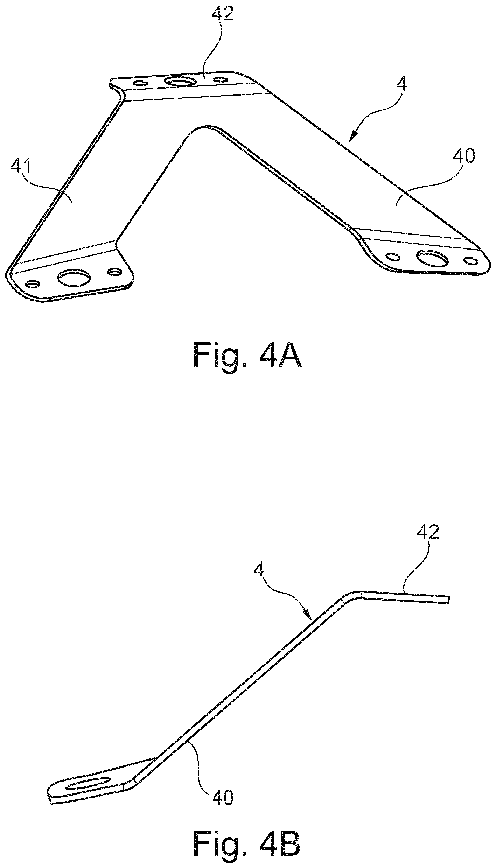

Durch die V-Form kann ein Befestigungsbügel 4 jeweils vergleichsweises dünnwandig ausgebildet werden (vgl. z.B. Figuren 4B, 5, 6C, 7C, 9A-9B und 10) weist lokal ein sehr kleines Flächenträgheitsmoment auf. Jeder einzelne Befestigungsbügel 4 ist damit an sich vergleichsweise einfach, d.h., unter Einwirkung einer vergleichsweise geringen Kraft, biegbar. Diese (lokale) Biegbarkeit ist mit Blick auf die unterschiedlichen Temperaturen, die an unterschiedlichen Abschnitten des Befestigungsbügels 4 anliegen, von Vorteil. Über die Anordnung mehrere V-förmiger Befestigungsbügel 4 verteilt über den Umfang des Mischers 20 ist aber gleichzeitig ein Gerüstsystem bereitgestellt, über das der Mischer 20 axial sehr stabil gehalten ist und das eine Kompensation resultierende Kräfte in axialer Richtung und in Umfangsrichtung erlaubt, die infolge von Vibrationen und Trägheitskräften auftreten können.

Eine erste Ausführungsvariante mit einem Verbindungsring 3 und mehreren hierzu separaten Befestigungsbügeln 4 ist in den Figuren 3A-3C, 4A-4B und 5 gezeigt. Der hier im Querschnitt im Wesentlichen L-förmige Verbindungsring 3 ist hierbei mit seinem am vorderen Rand des Verbindungsrings 3 vorgesehenen Befestigungsflansch an dritten Befestigungsstellen 310 an dem Verbindungsflansch 60 des Trägerbauteils 6 fixiert, wenn die Mischerbaugruppe 2 bestimmungsgemäß montiert wurde. Stromab ist der Verbindungsring 3 an seinem hinteren Rand unter Bildung mehrerer zweiter Befestigungsstellen 33a an der Innenseite des Verkleidungsbauteils 5 fixiert. In einem zwischen dem Verbindungsring 3 und der äußeren Mantelfläche des Mischers 20 gebildeten Zwischenraum sind umfangsseitig zueinander versetzt die Befestigungsbügel 4 angeordnet. Jeder Befestigungsbügel 4 ist hierbei über dasselbe Befestigungselement 7.1, mit dem der Verbindungsring 3 an einer zweiten Befestigungsstelle 33a mit dem Verkleidungsbauteil 5 verbunden ist, mit dem Verbindungsring 3 und dem Verkleidungsbauteil 5 verbunden. Die Verbindung des jeweiligen V-förmigen Befestigungsbügels 4 über ein Befestigungselement 7.1 erfolgt dabei an einem Befestigungsabschnitt 42 des Befestigungsflügels 4. Dieser Befestigungsabschnitt 42 bildet gleichzeitig eine Basis für zwei sich hiervon unter einem Winkel weg erstreckenden Verbindungsschenkel 40 und 41 des Befestigungsflügels 4, die an ihren vorderen Enden über je ein Befestigungselement 7.2 an dem Mischer 20 fixiert sind.

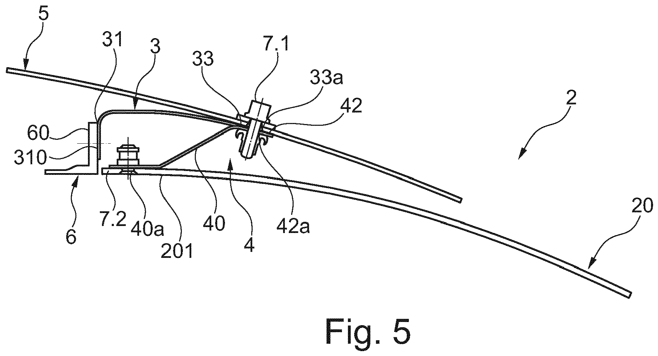

An jedem Befestigungsbügel 4 ist somit an einem Befestigungsabschnitt 42 eine Befestigungsstelle 42a für die Verbindung mit dem Verbindungsring 3 und dem Verkleidungsbauteil 5 vorgesehen. Darüber hinaus definieren die beiden Verbindungsschenkel 40, 41 eines Befestigungsbündels 4 erste, entlang einer Umfangsrichtung U zueinander beabstandete Befestigungsstellen 40a und 41a, an denen der jeweilige Befestigungsbügel 4 an dem Mischer 20 fixiert ist. Jeder der Verbindungsschenkel 40, 41 eines Befestigungsbügel 4 erstreckt sich dabei ausgehend von der Befestigungsstelle 42a für die Verbindung mit dem Verbindungsring 3 und dem Verkleidungsbauteil 5 entgegengesetzt zur Strömungsrichtung der Fluidströme f1, f2 von dem Auslass A weg in Richtung einer dem Trägerbauteil 6 zugewandten vorderen Stirnseite des Mischers 20. Hierbei überbrückt jeder der Verbindungsschenkel 40, 41 in Richtung der jeweiligen Befestigungsstelle 40a oder 40b, an der der jeweilige Verbindungsschenkel 40, 41 an dem Mischer 20 fixiert ist, einen radialen Abstand zwischen der Innenseite des den Verbindungsbereich 201 des Mischer 20 überragenden Endabschnitts des Verkleidungsbauteils 5 und den Verbindungsbereich 201 an einem vorderen Ende der äußeren Mantelfläche des Mischers 20. Jeder Schenkel 40, 41 eines Befestigungsbügels 4 erstreckt sich somit in einer parallel zu Mittelachse erzeugten Querschnittsansicht (z.B. entsprechend der Figur 5) schräg von einer zweiten Befestigungsstelle 42a für den Verbindungsring 3 und das Verkleidungsbauteil 5 zu einer in Richtung des Trägerbauteils 6 liegenden ersten Befestigungsstelle 40a oder 41a für den Mischer 20. Über die derart ausgestalteten und fixierten Befestigungsbügel 4 mit ihren Verbindungsschenkeln 40, 41 ist eine Elastizität in das dargestellte Mischersystem des Turbofan-Triebwerks T eingebracht, über die sich bei einer temperaturbedingten Wärmedehnung der Mischer 20 radial relativ zu den Triebwerksbauteilen 5 und 6 verlagern kann, gleichzeitig aber in axialer Richtung starr an den Triebwerksbauteilen 5 und 6 gehalten ist.

Durch die Erstreckung der Verbindungsschenkel 40, 41 ausgehend von dem Befestigungsabschnitt 42 in Richtung des Trägerbauteils 6 liegen die ersten Befestigungsstellen 40a und 41a, an denen ein jeweiliger Befestigungsbügel 4 an dem Mischer 20 fixiert ist, nicht nur axial versetzt zu den zweiten und dritten Befestigungsstellen 33a und 310, an denen der Verbindungsring 3 an den beiden Triebwerksbauteilen 5 und 6 fixiert ist. Vielmehr sind auch die ersten Befestigungsstellen 40a und 41a in axialer Richtung zwischen den zweiten und dritten Befestigungsstellen 33a und 310 angeordnet. Hierdurch kann der Verbindungsring 3 die entlang des Umfangs nebeneinander angeordneten Haltebügel 4 nahezu vollständig überdecken und die gesamte Verbindungsvorrichtung 3, 4 baut sehr kompakt.

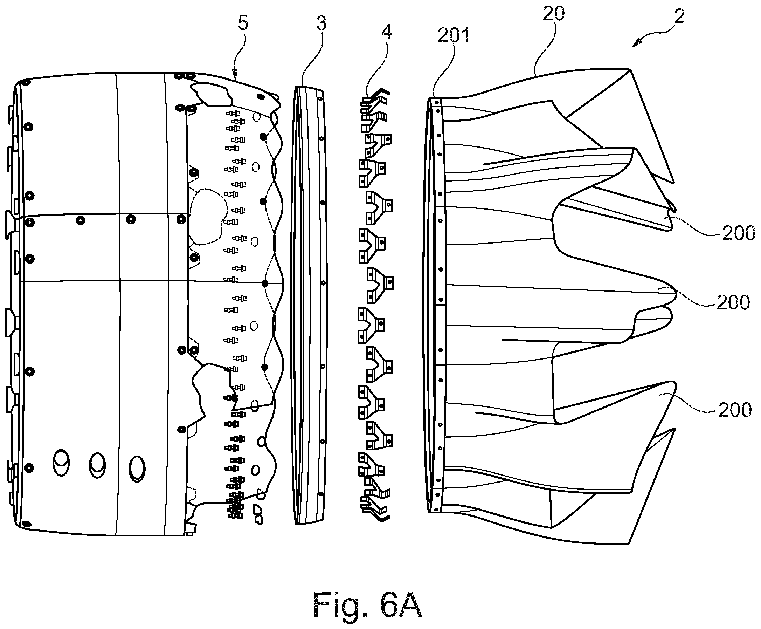

Bei der Ausführungsvariante der Figuren 6A bis 6C ist eine mit der Ausführungsvariante der Figuren 3A bis 5 weitestgehend übereinstimmende Struktur einer aus einem Verbindungsring 3 und mehreren Befestigungsbügeln 4 gebildeten Verbindungseinrichtung für die Anbindung der Mischerbaugruppe 2 gewählt. Insbesondere ist eine Fixierung des Verbindungsrings 3 über seinen Befestigungsflansch 31 an den Verbindungsflansch 60 des Trägerbauteils 6 überstimmend ausgestaltet. In der Figur 6B ist lediglich die Fixierung über Befestigungselemente in Form von Schraubbolzen exemplarisch näher veranschaulicht.

Ferner ist bei der Ausführungsvariante der Figuren 6A bis 6C vorgesehen, dass über die Verbindungseinrichtung 3, 4 nach bestimmungsgemäßer Montage der Mischerbaugruppe 2 an die beiden Triebwerksbauteile 5 und 6 ein axialer Mindestabstand zwischen dem Mischer 20 und dem Trägerbauteil 6 vorgegeben ist, sodass zwischen dem Mischer 20 unter dem Trägerbauteil 6 ein Ringspalt 8 gebildet ist. Über diesen Ringspalt 8 ist eine räumliche Trennung der thermisch unterschiedlich belasteten Komponenten, hier dem Trägerbauteil 6 und dem Mischer 20, um ein definiertes Maß vorgegeben. Hierüber sind das Trägerbauteil 6 und der Mischer 20 auch axial voneinander entkoppelt, wodurch ein besseres dynamisches Dämpfungsverhalten des Mischers 20 erreicht wird. Des Weiteren kann über den Ringspalt 8 eine gezielte Leckageströmung aus dem Primärstromkanal in den inzwischen dem Verkleidungsbauteil 5 und der äußeren Mantelfläche des Mischers 20 gebildeten Zwischenraum zugelassen werden. Dies ist unter Umständen für eine Durchmischung der beiden Fluidströmungen aus dem Primärstromkanal des Kerntriebwerks und dem Bypasskanal B förderlich. Ferner kann die gezielt zugelassene Leckage-Strömung zu einer verbesserten, mithin zusätzlich unterstützten (,re-energized') Strömung des (kalten) zweiten Fluidstroms f2 des Bypasskanals B im Bereich der Mischerbaugruppe 2 führen, insbesondere im Bereich des Verkleidungsbauteils 5. Der über die Verbindungseinrichtung 3, 4 eingestellte Ringspalt 8 weist hierbei beispielsweise eine Breite von maximal etwa 2 mm auf.

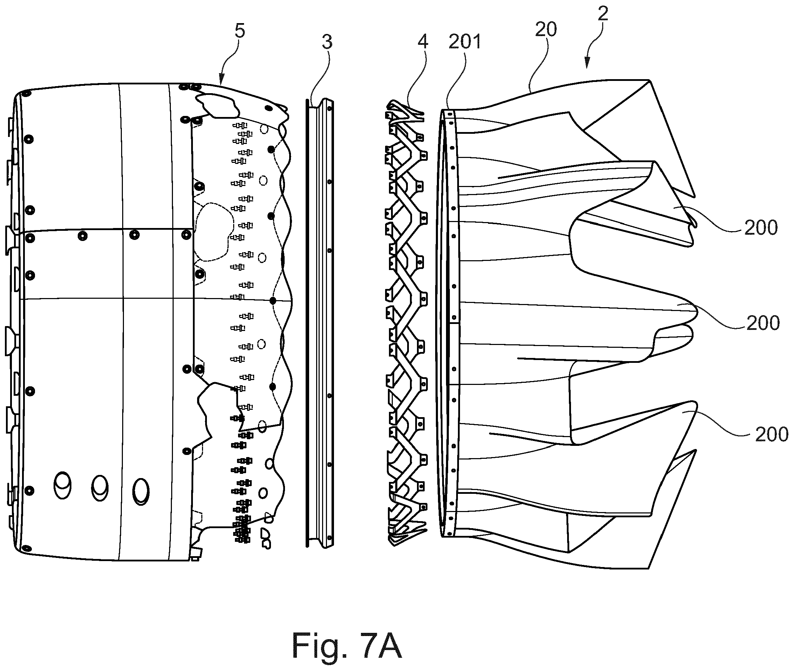

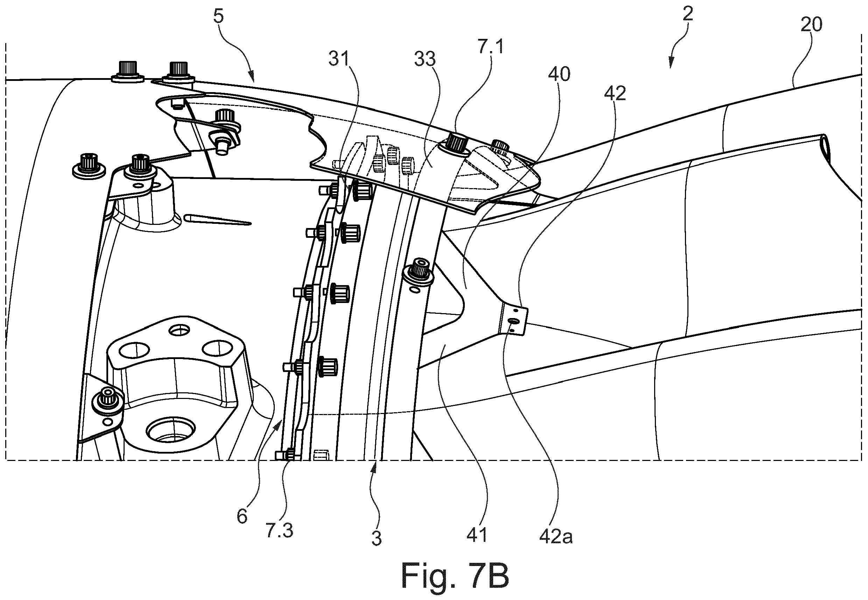

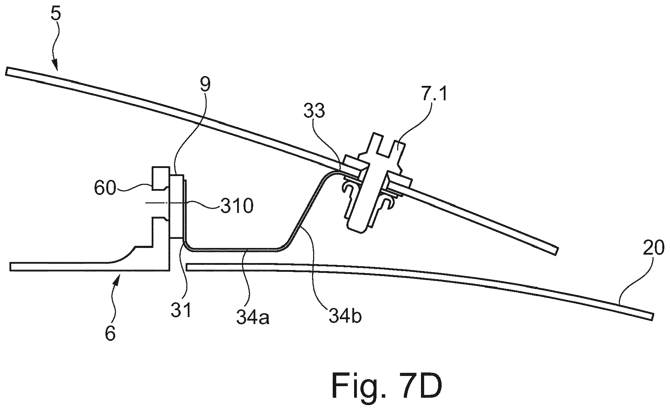

Bei der Ausführungsvariante der Figuren 7A bis 7D ist ebenfalls ein entsprechender Ringspalt 8 zwischen dem montierten Mischer 20 und dem Trägerbauteil 6 vorgesehen. Dabei ist die Vorgabe des gewünschten Mindestabstands durch die Anordnung eines Distanzstücks in Form eines Distanzrings 9 unterstützt. Dieser sich um die Mittelachse M erstreckende Distanzring 9 ist zwischen dem Verbindungsflansch 60 des Trägerbauteils 6 und dem Befestigungsflansch 31 des Verbindungsrings 3 angeordnet, um bei der Fixierung der Mischerbaugruppe 2 insbesondere an das Trägerbauteil 6 sicherzustellen, dass sich ein Ringspalt 8 mit der gewünschten Mindestbreite zwischen dem Trägerbauteil 6 und dem Mischer 20 ergibt.

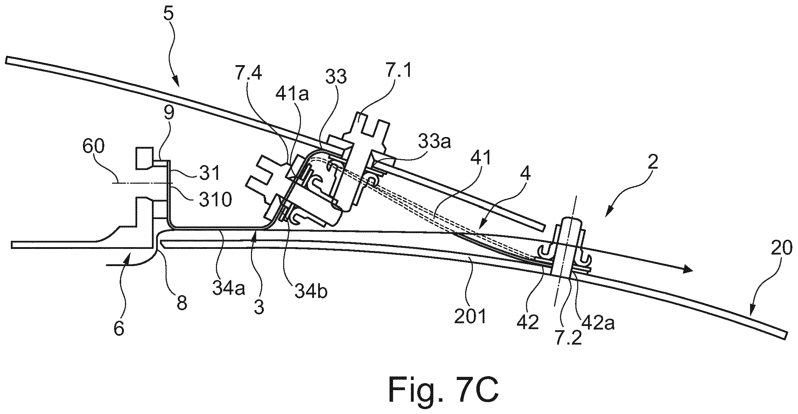

Darüber hinaus ist bei der Ausführungsvariante der Figuren 7A bis 7C der Verbindungsring 3 mit einem gestuften Mittelbereich versehen. So geht der Verbindungsring im Querschnitt von dem Befestigungsflansch 31 an seinem vorderen Rand zunächst in einen ersten Mittelabschnitt 34a über, der in der Querschnittansicht der Figur 7C in einem Winkel von etwa 90° zu dem Befestigungsflansch 31 verläuft. Dieser erste Mittelabschnitt 34a geht dann im weiteren axialen Verlauf in einen weiteren, zweiten Mittelabschnitt 34b über, der ebenfalls unter einem Winkel - hier von größer 90° - zu dem ersten Mittelabschnitt 34a verläuft und von dem der am hinteren Rand des Verbindungsringes vorgesehene Befestigungsabschnitt 33 abgewinkelt ist. Der Verbindungsring 3 bildet somit im Querschnitt im Wesentlichen die Konturen eines liegenden "S" aus. Durch die Formgebung mit einem im Querschnitt gestuften Mittelbereich weist der Verbindungsring 3 eine größere axiale Steifigkeit auf.

Die auch in dieser Ausführungsvariante vorgesehenen separaten, V-förmigen Befestigungsbügel 4, die entlang des Umfangs des Mischer 20 angeordnet und an diesem fixiert sind, erstrecken sich jeweils stromab des Verbindungsrings 3. Jeder Befestigungsbügel 4 ist dabei vorliegend über seine zwei Verbindungsschenkel 40 und 41 an jeweils einer Befestigungsstelle 40a oder 41a an dem zweiten Mittelabschnitt 34b des Verbindungsrings 3 fixiert. Über die die beiden Verbindungsschenkel 40 und 41 verbindende Basis, die als Befestigungsabschnitt 42 dient, ist jeder Befestigungsbügel 4 ferner an der äußeren Mantelfläche des Mischers 20 fixiert. Dementsprechend ist jeder Befestigungsbügel 4 hier nicht unmittelbar über ein Befestigungselement 7.1 an dem Verkleidungsbauteil 5 fixiert, sondern über je zwei zusätzliche Befestigungselemente 7.4 - z.B. jeweils ebenfalls in Form eines Schraubbolzens - an dem Verbindungsring 3. Erste Befestigungsstellen 42a für die Fixierung eines Befestigungsbügel 4 an dem Mischer 20 sind hier folglich durch die Befestigungsstellen 42a an der Basis 42 jedes Befestigungsbügel 4 definiert, die zwar ebenfalls axial in Richtung des Auslasses A zu den zweiten und dritten Befestigungsstellen 33a und 310 für die Fixierung des Verbindungsrings 3 an den beiden Triebwerksbauteilen 5 und 6 jeweils versetzt liegen. Bezogen auf die Achsrichtung liegen hier aber die zweiten Befestigungsstellen 33a, an denen eine Anbindung der Mischerbaugruppe 2 an das Verkleidungsbauteil 5 erfolgt, zwischen den ersten Befestigungsstellen 42a und den dritten Befestigungsstellen 310.

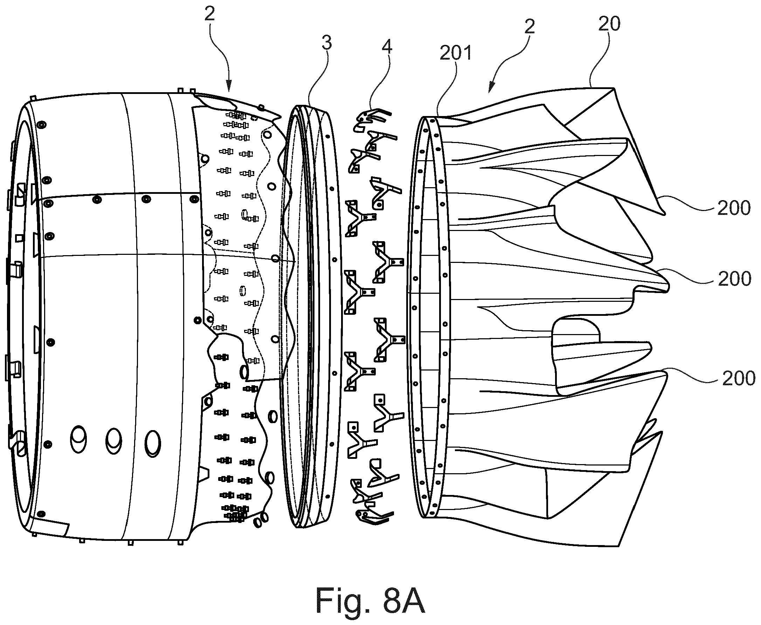

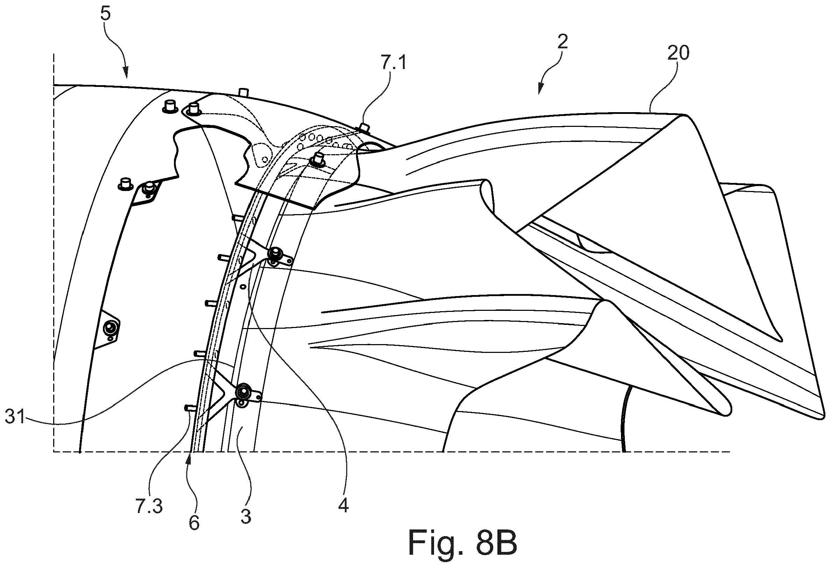

Bei der Ausführungsvariante der Figuren 8A-8B, 9A-9B und 10 ist in wesentlicher Übereinstimmung mit der Ausführungsvariante der Figuren 6A bis 6C eine Kombination aus Verbindungsring 3 und einer Vielzahl über den Umfang verteilten, V-förmigen Befestigungsbügeln 4 gewählt, bei der jeder Befestigungsbügel 4 teilweise oder vorzugsweise vollständig in dem Zwischenraum zwischen dem Verbindungsring 3 und der äußeren Mantelfläche des Mischer 20 aufgenommen ist.

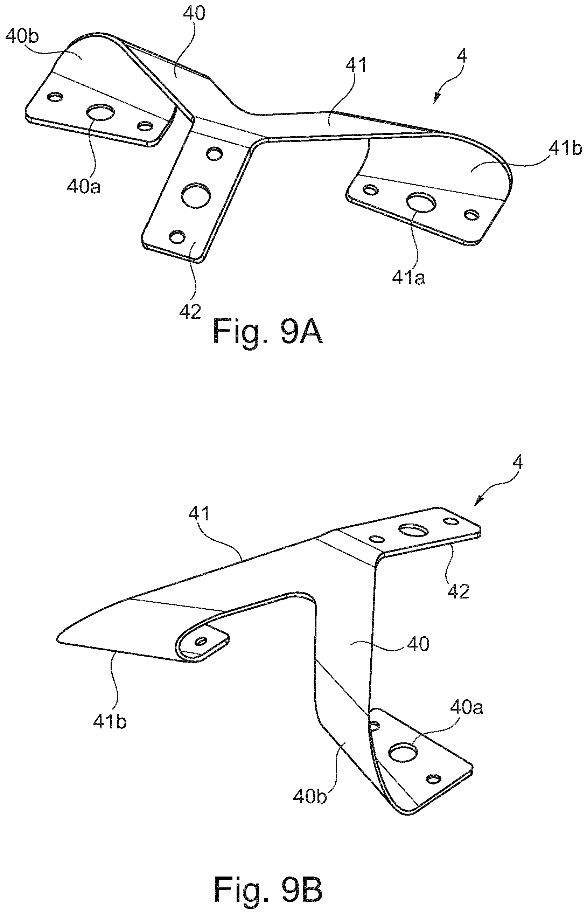

Im Unterschied zu der Ausführungsvariante der Figuren 6A bis 6C ist jedoch ein axialer Abstand zwischen den zweiten Befestigungsstellen 33a für die Fixierung an dem Verkleidungsbauteil 5 und den dritten Befestigungsstellen 310 für die Fixierung an dem Trägerbauteil 6 vergrößert. Ferner ist jeder der Verbindungsschenkel 40 und 41 eines Befestigungsbügels 4 in seinem Verlauf von dem zugehörigen Befestigungsabschnitt 42, der an dem Verkleidungsbauteil 5 und dem Befestigungsabschnitt 33 des Verbindungsrings 3 fixiert ist, zu seinem die jeweilige Befestigungsstelle 40a, 41a definierenden Ende mit einer Krümmung 40b, 41b von mehr als 120° versehen. Ein Endabschnitt eines jeden Verbindungsschenkels 40 oder 41, der an dem Mischer 20 fixiert ist, weist somit eine konvexe Wölbung auf, die in Richtung des Trägerbauteils 6 weist. Bei der Ausführungsvariante der Figuren 8A bis 10, zu der ein einzelner Befestigungsbügel 4 in den Figuren 9A und 9B in unterschiedlichen perspektivischen Ansichten vergrößert dargestellt ist, ist beispielsweise eine Krümmung von etwa 150° an jedem Verbindungsschenkel 40 oder 41 vorgesehen, um eine möglichst kompakte Verbindungseinrichtung 3, 4 für die Festlegung der Mischerbaugruppe 2 an den beiden Triebwerksbauteilen 5 und 6 mit einem guten Kompromiss zwischen axialer Steifigkeit und radialer Flexibilität zu erhalten. Die jeweilige Krümmung 40b, 41 b ist hierbei beispielsweise durch ein entsprechendes Umbiegen des jeweiligen Verbindungsschenkels 40, 41 erzeugt.

In Abweichung von den vorstehend erläuterten Ausführungsbeispielen der Figuren 1A bis 10 können selbstverständlich anstelle eines einzelnen durchgängigen Verbindungsrings 3 auch mehrere ringsegmentförmige Verbindungsbauteile vorgesehen sein, an denen integral vorzugsweise laschenartige und V-förmige Befestigungsabschnitte ausgebildet sind oder die mit mehreren V-förmigen zweiten Verbindungsbauteilen 4 kombiniert sind, um den Mischer 20 der Mischerbaugruppe 2 mit der gewünschten radialen Flexibilität an den beiden Triebwerksbauteilen 5 und 6 festzulegen, die im Betrieb des Turbofan-Triebwerks T vergleichsweise stark unterschiedlichen Betriebstemperaturen unterworfen sind.

### Bezugszeichenliste

- 11: Niederdruckverdichter
- 12: Hochdruckverdichter
- 13: Hochdruckturbine
- 14: Mitteldruckturbine
- 15: Niederdruckturbine
- 2: Mischerbaugruppe
- 20: Mischer
- 200: Leitelement
- 201: Verbindungsbereich
- 21: Schnittstelle
- 3: Verbindungsring (Verbindungsbauteil)
- 30: Befestigungslasche (Befestigungsabschnitt für Mischer)
- 300, 301: Verbindungsschenkel
- 300a, 301a: Befestigungsstelle
- 31: Befestigungsflansch (Befestigungsabschnitt für Verbindungsflansch)
- 310, 311: flanschseitige Befestigungsstelle
- 32a, 32b, 32c: Aussparung
- 33: Basis / Befestigungsabschnitt (für Verkleidungsbauteil)
- 33a: Befestigungsstelle
- 34a, 34b: Mittelabschnitt
- 4: Befestigungsbügel (zusätzliches Verbindungsbauteil)
- 40, 41: Verbindungsschenkel
- 40a, 41a: Befestigungsstelle
- 40b, 41b: Krümmung
- 42: Basis / Befestigungsabschnitt (für Verkleidungsbauteil oder Mischer)
- 42a: Befestigungsstelle
- 5: Verkleidungsbauteil
- 6: Trägerbauteil
- 60: Verbindungsflansch
- 7.1 - 7.4: Befestigungselement
- 8: Ringspalt
- 9: Distanzring (Distanzstück)
- A: Auslass
- B: Bypasskanal
- BK: Brennkammerabschnitt
- C: Austrittskonus
- E: Einlass / Intake
- F: Fan
- f1, f2: Fluidstrom
- FC: Fangehäuse
- L: Leitschaufelbaugruppe
- M: Mittelachse / Rotationsachse
- R: Eintrittsrichtung
- S: Rotorwelle
- T: Turbofan-Triebwerk
- TT: Turbine
- U: Umfangsrichtung
- V: Verdichter

## Patentansprüche

1. Turbofan-Triebwerk, das einen sich entlang einer Mittelachse (M) des Turbofan-Triebwerks (T) erstreckenden Primärstromkanal und einen Sekundärstromkanal (B) aufweist, wobei das Turbofan-Triebwerk (T) eine Mischerbaugruppe (2) umfasst, mit
- einem Mischer (20) für das Leiten eines ersten Fluidstroms (f1) aus dem Primärstromkanal und eines zweiten Fluidstroms (f2) aus dem Sekundärstromkanal (B) in Richtung eines Auslasses (A) des Turbofan-Triebwerks (T) sowie für die Vermischung der ersten und zweiten Fluidströme (f1, f2) und
- einer Verbindungseinrichtung (3, 4), die mindestens ein an dem Mischer (20) fixiertes Verbindungsbauteil (3; 4) aufweist und mittels der die Mischerbaugruppe (2) an zwei unterschiedlichen ersten und zweiten Triebwerksbauteilen (5, 6) des Turbofan-Triebwerks (T) festgelegt ist, die im Betrieb des Turbofan-Triebwerks unterschiedlich hohen Betriebstemperaturen unterworfen sind,
wobei das mindestens eine Verbindungsbauteil (3; 4) an dem Mischer (20) an wenigstens einer ersten Befestigungsstelle (300a, 301a; 40a, 41a; 42a) fixiert ist und über die Verbindungseinrichtung (3, 4) mindestens eine zweite Befestigungsstelle (33a) für die Verbindung der Mischerbaugruppe (2) mit dem ersten Triebwerksbauteil (5) und mindestens eine dritte Befestigungsstelle (310, 311) für die Verbindung der Mischerbaugruppe (2) mit dem zweiten Triebwerksbauteil (6) definiert sind, wobei
- die ersten, zweiten und dritten Befestigungsstellen bezogen auf die Mittelachse (M) des Turbofan-Triebwerks (T) axial zueinander versetzt sind, wenn die Mischerbaugruppe (2) bestimmungsgemäß an den zweiten und dritten Befestigungsstellen (33a, 310, 311) an den ersten und zweiten Triebwerksbauteilen (5, 6) festgelegt ist, und
- der Mischer (20) über das mindestens eine an der ersten Befestigungsstelle (300a, 301a; 40a, 41a; 42a) fixierte Verbindungsbauteil (3; 4) bezogen auf die Mittelachse (M) des Turbofan-Triebwerks (T) radial (20) sowohl relativ zu dem ersten Triebwerksbauteil (5) als auch relativ zu dem zweiten Triebwerksbauteil (6) verlagerbar gehalten ist, wenn die Mischerbaugruppe (2) bestimmungsgemäß an den zweiten und dritten Befestigungsstellen (33a, 310, 311) an den ersten und zweiten Triebwerksbauteilen (5, 6) festgelegt ist,
**dadurch gekennzeichnet, dass**
das an dem Mischer (20) fixierte Verbindungsbauteil (3; 4) eine V-förmige Kontur aufweist oder mindestens einen Befestigungsabschnitt (30) mit einer V-förmigen Kontur umfasst, wobei wenigstens ein Schenkel (300, 301; 40, 41) der V-Form oder eine die beiden Schenkel (300, 301; 40, 41) verbindende Basis (42) der V-Form an der wenigstens einen ersten Befestigungsstelle (300a, 301; 40a, 41a; 42a) an dem Mischer (20) fixiert ist.

2. Turbofan-Triebwerk nach Anspruch 1, **dadurch gekennzeichnet, dass** der Mischer (20) über das mindestens eine Verbindungsbauteil (3; 4) bezogen auf die Mittelachse (M) des Turbofan-Triebwerks (T) radial elastisch verlagerbar gehalten ist.

3. Turbofan-Triebwerk nach Anspruch 1 oder 2, **dadurch gekennzeichnet, dass** (a) bei einer Fixierung wenigstens eines Schenkels (300, 301; 40, 41) der V-Form an dem Mischer (20) eine Basis (33) der V-Form für eine Verbindung mit dem ersten Triebwerksbauteil (5) an der wenigstens einen zweiten Befestigungsstelle (33a) vorgesehen ist oder (b) bei einer Fixierung der Basis (42) der V-Form an dem Mischer (20) wenigstens ein Schenkel (40, 41) der V-Form für eine Verbindung mit dem ersten Triebwerksbauteil (5) an der wenigstens einen zweiten Befestigungsstelle vorgesehen ist und/oder wenigstens ein Schenkel (40, 41) der V-Form mit einem anderen, Verbindungsbauteil (3) der Verbindungseinrichtung (3, 4) verbunden ist, das mit dem ersten und/oder zweiten Triebwerksbauteil (5, 6) an der ersten und/oder zweiten Befestigungsstelle (33a; 310, 311) verbunden ist.

4. Turbofan-Triebwerk nach einem der vorhergehenden Ansprüche, **dadurch gekennzeichnet, dass** die erste Befestigungsstelle (300a, 301a; 40a, 41a; 42a) bezüglich der Mittelachse (M) radial zu der wenigstens einen zweiten Befestigungsstelle (33) und/oder radial zu der wenigstens einen dritten Befestigungsstelle (310, 311) versetzt ist.

5. Turbofan-Triebwerk nach einem der vorhergehenden Ansprüche, **dadurch gekennzeichnet, dass** das wenigstens eine Verbindungsbauteil (3; 4) zwei einstückig miteinander ausgebildete Abschnitte (30, 31, 33; 40, 41, 42) aufweist, wobei ein Abschnitt (30; 41, 42) an der wenigstens einen ersten Befestigungsstelle (300a, 301a; 40a, 41a) an dem Mischer (20) fixiert ist und der andere Abschnitt (33, 31; 42) zur Verbindung mit einem der ersten und zweiten Triebwerksbauteile (5, 6) an der wenigstens einen zweiten oder dritten Befestigungsstelle (33a; 310, 311) vorgesehen ist.

6. Turbofan-Triebwerk nach einem der vorhergehenden Ansprüche, **dadurch gekennzeichnet, dass** die Verbindungseinrichtung (3, 4) ein ringförmiges oder ringsegmentförmiges Verbindungsbauteil (3) umfasst, das die mindestens eine zweite Befestigungsstelle (33a) für die Verbindung der Mischerbaugruppe (2) mit dem ersten Triebwerksbauteil (5) und/oder die mindestens eine dritte Befestigungsstelle (310, 311) für die Verbindung der Mischerbaugruppe (2) mit dem zweiten Triebwerksbauteil (6) definiert.

7. Turbofan-Triebwerk nach den Ansprüche 5 und 6, **dadurch gekennzeichnet, dass** an dem ringförmigen oder ringsegmentförmigen Verbindungsbauteil (3) mehrere erste V-förmige und jeweils an dem Mischer (20) fixierte Befestigungsabschnitte (30) integral ausgebildet sind sowie mindestens ein mit mehreren ersten Befestigungsabschnitten (30) einstückig ausgebildeter weiterer Befestigungsabschnitt (33, 31), der zur Verbindung mit dem ersten oder zweiten Triebwerksbauteil (5; 6) vorgesehen ist.

8. Turbofan-Triebwerk nach einem der Ansprüche 1 bis 6, **dadurch gekennzeichnet, dass** die Verbindungseinrichtung (3, 4) mindestens zwei separat hergestellte Verbindungsbauteile (3, 4) umfasst, wobei
- ein erstes Verbindungsbauteil (3) für die Verbindung der Mischerbaugruppe (2) mit den ersten und zweiten Triebwerksbauteilen (5, 6) an zweiten und dritten Befestigungsstellen (33a, 310, 311) vorgesehen ist und
- mindestens ein weiteres, zweites Verbindungsbauteil (4), das an dem Mischer (20) an der mindestens einen ersten Befestigungsstelle (40a, 41a; 42a) fixiert ist und über das der Mischer (20) relativ zu den ersten und zweiten Triebwerksbauteilen (5, 6) verlagerbar gehalten werden kann, mit dem anderen, ersten Verbindungsbauteil (3) verbunden und/oder ebenfalls mit einem der ersten und zweiten Triebwerksbauteile (5, 6) verbunden ist.

9. Turbofan-Triebwerk nach den Ansprüchen 6 und 8, **dadurch gekennzeichnet, dass** das erste Verbindungsbauteil (3) für die Verbindung der Mischerbaugruppe (2) mit den ersten und zweiten Triebwerksbauteilen (5, 6) ringförmig oder ringsegmentförmig ist und mehrere zweite separat hergestellte, jeweils V-förmige Verbindungsbauteile (4) vorgesehen sind, die jeweils
(a) an wenigstens einer ersten Befestigungsstelle (40a, 41a; 42a) an dem Mischer (20) fixiert sind und
(b) mit dem ringförmigen oder ringsegmentförmigen Verbindungsbauteil (3) verbunden sind und/oder mit einem der ersten und zweiten Triebwerksbauteile (5, 6) verbunden sind.

10. Turbofan-Triebwerk nach einem der Ansprüche 8 und 9, **dadurch gekennzeichnet, dass** sich das erste Verbindungsbauteil (3) für die Verbindung der Mischerbaugruppe (2) mit den ersten und zweiten Triebwerksbauteilen (5, 6) über das mindestens eine weitere, zweite Verbindungsbauteil (4), das an dem Mischer (20) an der mindestens einen ersten Befestigungsstelle (40a, 41a; 42a) fixiert ist, hinweg erstreckt.

11. Turbofan-Triebwerk nach einem der Ansprüche 8 bis 10, **dadurch gekennzeichnet, dass** das zweite Verbindungsbauteil (4) einen Befestigungsabschnitt (42) für die Verbindung mit dem ersten Verbindungsbauteil (3) und/oder dem ersten Triebwerksbauteil (5) ausbildet sowie wenigstens einen sich von dem Befestigungsabschnitt (42) weg erstreckenden Verbindungsschenkel (40, 41), der an der mindestens einen ersten Befestigungsstelle (40a, 41a) an dem Mischer (20) fixiert ist, wobei der Verbindungsschenkel (40, 41) in seinem Verlauf von dem Befestigungsabschnitt (42) zu der ersten Befestigungsstelle (40a, 41a) wenigstens in einem Bereich eine Krümmung (40b, 41b) um mehr als 90° aufweist.

12. Turbofan-Triebwerk nach einem der vorhergehenden Ansprüche, **dadurch gekennzeichnet, dass** über die Verbindungseinrichtung (3, 4) ein axialer Mindestabstand des Mischers (20) zu dem zweiten Triebwerksbauteil (6) vorgegeben ist, sodass zwischen dem Mischer (20) und dem zweiten Triebwerksbauteil (6) ein Spalt (8), insbesondere ein ringförmiger Spalt (8) definiert ist, wenn die Mischerbaugruppe (2) bestimmungsgemäß an den ersten und zweiten Triebwerksbauteilen (5, 6) festgelegt ist.

13. Turbofan-Triebwerk nach Anspruch 12, **dadurch gekennzeichnet, dass** für die Verbindung der Mischerbaugruppe (2) an dem zweiten Triebwerksbauteil (6) mindestens ein Distanzstück (9) vorgesehen ist, um den Mischer (20) in dem vorgegebenen axialen Mindestabstand zu dem zweiten Triebwerksbauteil (6) zu halten, wenn die Mischerbaugruppe (2) bestimmungsgemäß an den ersten und zweiten Triebwerksbauteilen (5, 6) festgelegt ist.

## Claims

1. Turbofan engine which has, extending along the centre axis (M) of the turbofan engine (T), a primary flow duct and a secondary flow duct (B), wherein the turbofan engine (T) comprises a mixer assembly (2) with
- a mixer (20) for conveying a first fluid flow (f1) from the primary flow duct and a second fluid flow (f2) from the secondary flow duct (B) towards an outlet (A) of the turbofan engine (T), and for mixing the first and second fluid flows (f1, f2) and
- a connection device (3, 4) which has at least one connection component (3; 4) attached to the mixer (20) and by means of which the mixer assembly (2) is secured to two different first and second engine components (5, 6) of the turbofan engine (T) which, during operation of the turbofan engine, experience different operating temperatures,
wherein the at least one connection component (3; 4) is attached to the mixer (20) at least at one first attachment point (300a, 301a; 40a, 41a; 42a) and the connection device (3, 4) defines at least one second attachment point (33a) for connecting the mixer assembly (2) to the first engine component (5) and at least one third attachment point (310, 311) for connecting the mixer assembly (2) to the second engine component (6), wherein
- the first, second and third attachment points are axially offset with respect to one another and to the centre axis (M) of the turbofan engine (T), when the mixer assembly (2) is correctly attached, at the second and third attachment points (33a, 310, 311), to the first and second engine components (5, 6), and
- the mixer (20) is held, by the at least one connection component (3; 4) attached at the first attachment point (300a, 301a; 40a, 41a; 42a), so as to be radially (20) displaceable, with regard to the centre axis (M) of the turbofan engine (T), both relative to the first engine component (5) and relative to the second engine component (6), when the mixer assembly (2) is correctly attached, at the second and third attachment points (33a, 310, 311), to the first and second engine components (5, 6),
**characterized in that**
the connection component (3; 4) attached to the mixer (20) has a V-shaped contour or comprises at least one attachment portion (30) with a V-shaped contour, wherein at least one leg (300, 301; 40, 41) of the V shape or a base (42) of the V shape, connecting the two legs (300, 301; 40, 41), is attached to the mixer (20) at the at least one first attachment point (300a, 301; 40a, 41a; 42a).

2. Turbofan engine according to Claim 1, **characterized in that** the mixer (20) is held, by the at least one connection component (3; 4), so as to be radially elastically displaceable with regard to the centre axis (M) of the turbofan engine (T).

3. Turbofan engine according to Claim 1 or 2, **characterized in that** (a) when at least one leg (300, 301; 40, 41) of the V shape is attached to the mixer (20), a base (33) of the V shape is provided for a connection to the first engine component (5) at the at least one second attachment point (33a), or (b) when the base (42) of the V shape is attached to the mixer (20), at least one leg (40, 41) of the V shape is provided for a connection to the first engine component (5) at the at least one second attachment point, and/or at least one leg (40, 41) of the V shape is connected to a different connection component (3) of the connection device (3, 4), which is connected to the first and/or second engine component (5, 6) at the first and/or second attachment point (33a; 310, 311).

4. Turbofan engine according to one of the preceding claims, **characterized in that** the first attachment point (300a, 301a; 40a, 41a; 42a), with regard to the centre axis (M), is radially offset relative to the at least one second attachment point (33) and/or is radially offset relative to the at least one third attachment point (310, 311).

5. Turbofan engine according to one of the preceding claims, **characterized in that** the at least one connection component (3; 4) comprises two portions (30, 31, 33; 40, 41, 42) formed in one piece with one another, wherein one portion (30; 41, 42) is attached to the mixer (20) at the at least one first attachment point (300a, 301a; 40a, 41a), and the other portion (33, 31; 42) is provided for connection to one of the first and second engine components (5, 6) at the at least one second or third attachment point (33a; 310, 311) .

6. Turbofan engine according to one of the preceding claims, **characterized in that** the connection device (3, 4) comprises a ring-shaped or ring-segment-shaped connection component (3) which defines the at least one second attachment point (33a) for connecting the mixer assembly (2) to the first engine component (5) and/or defines the at least one third attachment point (310, 311) for connecting the mixer assembly (2) to the second engine component (6).

7. Turbofan engine according to Claims 5 and 6, **characterized in that** on the ring-shaped or ring-segment-shaped connection component (3) there are integrally formed multiple first V-shaped attachment portions (30) respectively attached to the mixer (20), and at least one further attachment portion (33, 31) which is formed in one piece with multiple first attachment portions (30) and which is provided for connection to the first or second engine component (5; 6).

8. Turbofan engine according to one of Claims 1 to 6, **characterized in that** the connection device (3, 4) comprises at least two separately produced connection components (3, 4), wherein
- a first connection component (3) is provided for connecting the mixer assembly (2) to the first and second engine components (5, 6) at second and third attachment points (33a, 310, 311), and
- at least one further, second connection component (4), which is attached to the mixer (20) at the at least one first attachment point (40a, 41a; 42a) and by means of which the mixer (20) can be held so as to be displaceable relative to the first and second engine components (5, 6), is connected to the other, first connection component (3) and/or is also connected to one of the first and second engine components (5, 6).

9. Turbofan engine according to Claims 6 and 8, **characterized in that** the first connection component (3) for connecting the mixer assembly (2) to the first and second engine components (5, 6) is ring-shaped or ring-segment-shaped and there are provided multiple second separately produced in each case V-shaped connection components (4) which are each
(a) attached to the mixer (20) at at least a first attachment point (40a, 41a; 42a) and
(b) connected to the ring-shaped or ring-segment-shaped connection component (3) and/or connected to one of the first and second engine components (5, 6).

10. Turbofan engine according to either of Claims 8 and 9, **characterized in that** the first connection component (3) for connecting the mixer assembly (2) to the first and second engine components (5, 6) extends beyond the at least one further, second connection component (4) which is attached to the mixer (20) at the at least one first attachment point (40a, 41a; 42a).

11. Turbofan engine according to one of Claims 8 to 10, **characterized in that** the second connection component (4) forms an attachment portion (42) for connecting to the first connection component (3) and/or to the first engine component (5), and at least one connecting leg (40, 41), extending away from the attachment portion (42), which is attached to the mixer (20) at the at least one first attachment point (40a, 41a), wherein the connecting leg (40, 41), in its path from the attachment portion (42) to the first attachment point (40a, 41a), has at least in one region a curvature (40b, 41b) of greater than 90°.

12. Turbofan engine according to one of the preceding claims, **characterized in that** the connection device (3, 4) sets an axial minimum distance between the mixer (20) and the second engine component (6) so that a gap (8), in particular an annular gap (8), is defined between the mixer (20) and the second engine component (6) when the mixer assembly (2) is correctly attached to the first and second engine components (5, 6).

13. Turbofan engine according to Claim 12, **characterized in that**, for connecting the mixer assembly (2) to the second engine component (6), there is provided at least one spacer (9) in order to keep the set axial minimum distance between the mixer (20) and the second engine component (6) when the mixer assembly (2) is correctly attached to the first and second engine components (5, 6).

## Revendications

1. Turboréacteur, lequel comporte un canal de flux primaire s'étendant le long d'un axe médian (M) du turboréacteur (T) et un canal de flux secondaire (B), dans laquelle le turboréacteur (T) comprend un ensemble formant mélangeur (2), dotée
- d'un mélangeur (20) pour conduire un premier flux de fluide (f1) hors de le canal de flux primaire et un deuxième flux de fluide (f3) hors de le canal de flux secondaire (B) en direction d'une sortie (A) du turboréacteur (T) ainsi que pour mélanger le premier et le deuxième flux de fluide (f1, f2) et
- d'un dispositif de raccordement (3, 4), lequel comporte au moins une pièce de raccordement (3 ; 4) fixée au mélangeur (20) et au moyen duquel l'ensemble formant mélangeur (2) est fixé à deux premier et deuxième différents éléments de moteur (5, 6) du turboréacteur (T), lesquels sont soumis à des températures de fonctionnement différentes pendant le fonctionnement du turboréacteur,
dans laquelle l'au moins une pièce de raccordement (3 ; 4) est fixée au mélangeur (20) sur au moins un premier point de fixation (300a, 301a ; 40a, 41a ; 42a) et au moins un deuxième point de fixation (33a) pour le raccordement de l'ensemble formant mélangeur (2) au premier élément de moteur (5) et au moins un troisième point de fixation (310, 311) pour le raccordement de l'ensemble formant mélangeur (2) au deuxième élément de moteur (6) sont définis par le biais du dispositif de raccordement (3 ; 4), dans laquelle
- les premier, deuxième et troisième points de fixation sont axialement par rapport à l'axe médian (M) du turboréacteur (T) en décalage l'un par rapport à l'autre, lorsque l'ensemble formant mélangeur (2) est fixé comme prévu aux premier et deuxième éléments de moteur (5, 6) sur les deuxième et troisième points de fixation (33a, 310, 311), et
- le mélangeur (20) est maintenu déplaçable radialement (20) par rapport à l'axe médian (M) du turboréacteur (T) aussi bien relativement au premier élément de moteur (5) que relativement au deuxième élément de moteur (6) par le biais de l'au moins une pièce de raccordement (3 ; 4) fixée sur le premier point de fixation (300a, 301a ; 40a, 41a ; 42a), lorsque l'ensemble formant mélangeur (2) est fixé comme prévu aux premier et deuxième éléments de moteur (5, 6) sur les deuxième et troisième points de fixation (33a, 310, 311),
**caractérisée en ce que** la pièce de raccordement (3 ; 4) fixée sur le mélangeur (20) possède un contour en forme de V ou comprend au moins une section de fixation (30) avec un contour en forme de V, dans laquelle au moins une jambe (300, 301 ; 40, 41) de la forme en V ou une base (42) reliant les deux jambes (300, 301 ; 40, 41) de la forme en V est fixée au mélangeur (20) sur l'au moins un premier point de fixation (300a, 301 ; 40a, 41a ; 42a).

2. Turboréacteur selon la revendication 1, **caractérisée en ce que** le mélangeur (20) est maintenu élastiquement déplaçable radialement par rapport à l'axe médian (M) du turboréacteur (T) par le biais de l'au moins une pièce de raccordement (3 ; 4).

3. Turboréacteur selon la revendication 1 ou 2, **caractérisée en ce que** (a) lors d'une fixation d'au moins une jambe (300, 301 ; 40, 41) de la forme en V au mélangeur (20), une base (33) de la forme V est prévue pour un raccordement avec le premier élément de moteur (5) sur l'au moins un deuxième point de fixation (33a) ou (b) lors d'une fixation de la base (42) de la forme en V au mélangeur (20) au moins une jambe (40, 41) de la forme en V est prévue pour un raccordement avec le premier élément de moteur (5) sur l'au moins un deuxième point de fixation et/ou au moins une jambe (40, 41) de la forme en V est raccordée avec une autre pièce de raccordement (3) du dispositif de raccordement (3, 4), laquelle est raccordée avec le premier et/ou le deuxième élément de moteur (5, 6) sur le premier et/ou le deuxième point de fixation (33a ; 310, 311).

4. Turboréacteur selon l'une des revendications précédentes, **caractérisée en ce que** le premier point de fixation (300a, 301a ; 40a, 41a ; 42a) est, par rapport à l'axe médian (M), décalé radialement par rapport à l'au moins un deuxième point de fixation (33) et/ou radialement par rapport à l'au moins un troisième point de fixation (310, 311).

5. Turboréacteur selon l'une des revendications précédentes, **caractérisée en ce que** l'au moins une pièce de raccordement (3 ; 4) comporte deux sections (30, 31, 33 ; 40, 41, 42) réalisées d'une pièce l'une avec l'autre, dans laquelle une section (30 ; 41, 42) est fixée au mélangeur (20) sur l'au moins un premier point de fixation (300a, 301a ; 40a, 41a) et l'autre section (33, 31 ; 42) est prévue pour le raccordement avec un des premier et deuxième éléments de moteur (5, 6) sur l'au moins un deuxième ou troisième point de fixation (33a ; 310, 311).

6. Turboréacteur selon l'une des revendications précédentes, **caractérisée en ce que** le dispositif de raccordement (3, 4) comprend une pièce de raccordement (3) en forme de bague ou de segment de bague, laquelle définit l'au moins un deuxième point de fixation (33a) pour le raccordement de l'ensemble formant mélangeur (2) avec le premier élément de moteur (5) et/ou l'au moins un troisième point de fixation (310, 311) pour le raccordement de l'ensemble formant mélangeur (2) avec le deuxième élément de moteur (6).

7. Turboréacteur selon les revendications 5 et 6, **caractérisée en ce que** plusieurs premières sections de fixation (30) en forme de V et respectivement fixées au mélangeur (20) sont réalisées comme intégrées sur la pièce de raccordement (3) en forme de bague ou de segment de bague de même qu'au moins une section de fixation supplémentaire (33, 31) réalisée d'une pièce avec plusieurs premières sections de fixation (30), laquelle est prévue pour le raccordement avec le premier ou le deuxième élément de moteur (5 ; 6).

8. Turboréacteur selon l'une des revendications 1 à 6, **caractérisée en ce que** le dispositif de raccordement (3, 4) comprend au moins deux pièces de raccordement (3, 4) fabriquées séparément, dans laquelle
- une première pièce de raccordement (3) est prévue pour le raccordement de l'ensemble formant mélangeur (2) avec le premier et le deuxième élément de moteur (5, 6) sur les deuxième et troisième points de fixation (33a, 310, 311) et
- au moins une deuxième pièce de raccordement (4) supplémentaire, laquelle est fixée au mélangeur (20) sur l'au moins un premier point de fixation (40a, 41a ; 42a) et par le biais de laquelle le mélangeur (20) peut être maintenu comme déplaçable relativement aux premier et deuxième éléments de moteur (5, 6) et est raccordée à l'autre première pièce de raccordement (3) et/ou le cas échéant est raccordée à l'un des premier et deuxième éléments de moteur (5, 6).

9. Turboréacteur selon les revendications 6 et 8, **caractérisée en ce que** la première pièce de raccordement (3) est en forme de bague ou de segment de bague pour le raccordement de l'ensemble formant mélangeur (2) avec le premier et le deuxième élément de moteur (5, 6) et plusieurs deuxièmes pièces de raccordement (4) fabriquées séparément et respectivement en forme de V sont prévues, lesquelles sont respectivement
(a) fixées au mélangeur (20) sur au moins un premier point de fixation (40a, 41a ; 42a) et
(b) raccordées à la pièce de raccordement (3) en forme de bague ou de segment de bague et/ou raccordées à un des premier et deuxième éléments de moteur (5, 6) .

10. Turboréacteur selon l'une des revendications 8 et 9, **caractérisée en ce que** la première pièce de raccordement (3) pour le raccordement de l'ensemble formant mélangeur (2) avec le premier et le deuxième élément de moteur (5, 6) s'étend à travers l'au moins une deuxième pièce de raccordement (4) supplémentaire, laquelle est fixée au mélangeur (20) sur l'au moins un premier point de fixation (40a, 41a ; 42a).

11. Turboréacteur selon l'une des revendications 8 à 10, **caractérisée en ce que** la deuxième pièce de raccordement (4) réalise une section de fixation (42) pour le raccordement avec la première pièce de raccordement (3) et/ou avec le premier élément de moteur (5) ainsi qu'au moins une jambe de fixation (40, 41) s'étendant hors de la section de fixation (42), laquelle est fixée au mélangeur (20) sur l'au moins un premier point de fixation (40a, 41a), dans laquelle la jambe de fixation (40, 41) comporte au moins dans une région une courbure (40b, 41b) de plus de 90° dans son parcours de la section de fixation (42) jusqu'au premier point de fixation (40a, 41a) .

12. Turboréacteur selon l'une des revendications précédentes, **caractérisée en ce qu'**un distance axial minimal du mélangeur (20) au deuxième élément de moteur (6) est défini par le biais du dispositif de raccordement (3, 4), de sorte qu'entre le mélangeur (20) et le deuxième élément de moteur (6) est défini une fente (8), en particulier une fente annulaire (8), lorsque l'ensemble formant mélangeur (2) est fixé comme prévu aux premier et deuxième éléments de moteur (5, 6).

13. Turboréacteur selon la revendication 12, **caractérisée en ce qu'**au moins une entretoise (9) est prévue pour le raccordement de l'ensemble formant mélangeur (2) au deuxième élément de moteur (6), afin de maintenir le mélangeur (20) dans la distance axial minimal prédéfini au deuxième élément de moteur (6), lorsque l'ensemble formant mélangeur (2) est fixé comme prévu aux premier et deuxième éléments de moteur (5, 6).
